# EUROPÄISCHE PATENTSCHRIFT

(11) **EP 2 917 254 B1**
(45) Veröffentlichungstag und Bekanntmachung des Hinweises auf die Patenterteilung: **09.01.2019**
(21) Anmeldenummer: 13786677.8
(22) Anmeldetag: 07.11.2013
(51) Int. Cl.: C08G 18/10, C08G 18/12, C09J 175/04, C09J 163/00

(54) **REAKTIVE FLÜSSIGKAUTSCHUKE AUS BLOCKIERTEN ISOCYANAT-TERMINIERTEN PRÄPOLYMEREN MIT GLYCOLFÄNGER**
REACTIVE LIQUID RUBBERS FROM BLOCKED ISOCYANATE TERMINATED PREPOLYMERS WITH GLYCOL CATCHER
CAOUTCHOUCS LIQUIDES RÉACTIFS EN PRÉPOLYMÈRES ISOCYANATE-TERMINÉS BLOQUÉS AVEC COLLECTEUR DE GLYCOL

(30) Priorität: 12.11.2012 EP 12192265
(43) Veröffentlichungstag der Anmeldung: 16.09.2015
(73) Patentinhaber: Sika Technology AG, 6340 Baar (CH)
(72) Erfinder: KRÜGER, Christian, CH-8952 Schlieren (CH); SCHULENBURG, Jan Olaf, CH-8610 Uster (CH); HOFSTETTER, David, CH-8405 Winterthur (CH); VOCI, Tina, CH-8050 Zürich (CH)
(74) Vertreter: Sika Patent Attorneys
(86) Internationale Anmeldenummer: PCT/EP2013/073298
(87) Internationale Veröffentlichungsnummer: WO 2014/072426

(56) Entgegenhaltungen:
- EP-A1- 1 431 325
- EP-A1- 1 498 441
- EP-A1- 1 916 272
- FR-A- 1 531 824

## Beschreibung

### Technisches Gebiet

Die Erfindung betrifft ein Verfahren zur Herstellung eines Flüssigkautschuks, der einen Epoxidgruppen-terminierten Schlagzähigkeitsmodifikator enthält, den daraus erhältlichen Flüssigkautschuk, seine Verwendung und den Flüssigkautschuk enthaltende 1K- oder 2K-Epoxidharzzusammensetzungen, bei denen es sich bevorzugt um Klebstoffe handelt.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweißen immer häufiger hochwertige Klebstoffe eingesetzt. Dadurch entstehen Vorteile und neue Möglichkeiten in der Fertigung, beispielsweise die Fertigung von Verbund- und Hybridwerkstoffen oder auch größere Freiheiten beim Design von Bauteilen. Die Klebstoffe müssen für eine Anwendung in der Fahrzeugherstellung gute Haftungen auf allen eingesetzten Untergründen, insbesondere elektrolytisch verzinkten, feuerverzinkten, und nachträglich phosphatierten Stahlblechen, beölten Stahlblechen sowie auf verschiedenen, gegebenenfalls oberflächenbehandelten, Aluminiumlegierungen aufweisen. Diese guten Haftungseigenschaften müssen besonders auch nach Alterung (Wechselklima, Salzsprühbad etc.) ohne große Qualitätseinbussen erhalten bleiben. Wenn die Klebstoffe als Rohbauklebstoffe im Automobilbau eingesetzt werden, ist die Beständigkeit dieser Klebstoffe gegenüber Reinigungsbädern und Tauchlackierung (sog. Auswaschbeständigkeit) von großer Wichtigkeit, damit die Prozesssicherheit beim Hersteller garantiert werden kann.

Die Klebstoffe für den Rohbau sollen im Fall von 1K Klebstoffen unter den üblichen Einbrennbedingungen von idealerweise 30 Min. bei 180 °C aushärten. Im Fall von 2K Klebstoffen soll die Aushärtung bei Raumtemperatur im Lauf von einigen Tagen bis ca. 1 Woche erfolgen aber auch ein beschleunigtes Aushärtungsregime wie z. B. 4h RT gefolgt von 30 min 60°C oder 85°C soll anwendbar sein. Des Weiteren sollen sie aber auch bis etwa 220 °C beständig sein. Weitere Anforderungen für einen solchen gehärteten Klebstoff beziehungsweise der Verklebung sind die Gewährleistung der Betriebssicherheit sowohl bei hohen Temperaturen bis etwa 90 °C als auch bei tiefen Temperaturen bis etwa -40 °C. Da es sich bei diesen Klebstoffen um strukturelle Klebstoffe handelt und deshalb diese Klebstoffe strukturelle Teile verkleben, sind eine hohe Festigkeit und Schlagzähigkeit des Klebstoffes von größter Wichtigkeit.

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl große Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (z.B. < - 10 °C).

Aus der Literatur sind zwei Methoden bekannt, wie die Sprödigkeit von Epoxidklebstoffen reduziert und damit die Schlagzähigkeit erhöht werden kann: Einerseits kann das Ziel durch die Beimengung von zumindest teilvernetzten hochmolekularen Verbindungen wie Latices von Kern/Schale-Polymeren oder anderen flexibilisierenden Polymeren und Copolymeren erreicht werden. Eine solche Methode ist z.B. in US 5290857 beschrieben. Andererseits kann auch durch Einführung von Weichsegmenten, z.B. durch die entsprechende Modifizierung der Epoxidkomponenten, eine gewisse Zähigkeitserhöhung erreicht werden. So werden in US 4952645 Epoxidharzzusammensetzungen beschrieben, welche durch die Umsetzung mit Carbonsäuren, insbesondere di- oder trimeren Fettsäuren, sowie mit Carbonsäureterminierten Diolen flexibilisiert wurden.

EP 0353190 A2 betrifft eine Flexibilisierungskomponente für Epoxidharze auf Basis von Monophenol- oder Epoxy-terminierten Polymeren. EP 1574537 A1 und EP 1602702 A1 beschreiben Epoxidharz-Klebstoffzusammensetzungen, die Monophenol- oder Epoxy-terminierte Polymere als Schlagfestmacher enthalten.

WO 2004/055092 A1 beschreibt hitzehärtbare Epoxidharzzusammensetzungen mit verbesserter Schlagzähigkeit durch Verwendung eines Epoxidgruppen-terminierten Schlagzähigkeitsmodifikators im Epoxidkleber, wobei der Schlagzähigkeitsmodifikator durch Umsetzung von einem Isocyanat-terminierten Präpolymer mit Hydroxy-terminierten Epoxidverbindungen erhalten wird.

WO 2005/007720 A1 beschreibt Epoxidgruppen-terminierte Schlagzähigkeitsmodifikatoren, die durch Umsetzung von einem Isocyanat-terminierten Präpolymer mit Hydroxy-terminierten Epoxidverbindungen erhalten werden, wobei der Schlagzähigkeitsmodifikator mindestens ein aromatisches Strukturelement aufweist, welches über Urethangruppen in die Polymerkette eingebunden ist.

In US 2009/0029059 A1 werden Epoxyzusammensetzungen beschrieben, die zur Beschichtung von Wasserleitungen geeignet sind. Die Zusammensetzung umfasst ein Epoxyharz, ein Anhydrid und ein Härtungsmittel. In den eingesetzten Epoxidharzzusammensetzungen sind Bis-α-glycole enthalten, die keine Epoxidgruppen aufweisen und daher nicht in die Matrix einreagieren. Aus diesem Grund können die Bis-α-glycole aus den Beschichtungen ausgewaschen werden, was ein Gesundheitsproblem darstellt. Es wird daher auch ein Verfahren beschrieben, bei dem in einem Epoxidharz vorhandene Bis-α-glycole durch Umsetzung mit Anhydrid umgewandelt werden, um so mit der Matrix reagieren zu können.

FR 1531824 A betrifft die Herstellung eines Polyepoxids aus der Umsetzung eines Isocyanat-funktionellen Polyurethans mit einem Epoxyalkohol. Das erhaltene Produkt kann anschließend mit einem Härter wie einem Anhydrid gehärtet werden.

EP 1916272 A1, EP 1431325 A1 und EP 1498441 A1 beschreiben Zusammensetzungen, die ein Epoxidgruppen-terminiertes Polyurethan-Prepolymer enthalten, das durch Umsetzung von einem Isocyanatgruppen enthaltenden Polyurethan-Prepolymer mit einer Hydroxygruppen enthaltenden Epoxidverbindung erhalten wird.

Durch Einsatz von Epoxidgruppen-terminierten Schlagzähigkeitsmodifikatoren, wie sie z.B. in vorstehend diskutierten WO 2004/055092 A1 oder WO 2005/007720 A1 beschrieben sind, kann eine deutlich verbesserte Schlagzähigkeit bei einkomponentigen oder zweikomponentigen Epoxidharz-Klebstoffen erreicht werden. Viele Epoxidharze enthalten als Nebenprodukt der Synthese oder bevorzugt gezielt Epoxidverbindungen, die primäre oder sekundäre Hydroxylgruppen aufweisen. Es wäre daher wünschenswert, Epoxid-terminierte Schlagzähmodifikatoren durch Umsetzung von Iscocyanat-terminierten Präpolymeren mit solchen Epoxidharzen zu bilden.

Bei der Synthese von Epoxidharzen werden aber neben den Zielverbindungen auch zahlreiche Epoxide und Glykole als Nebenprodukte gebildet. Zur Herstellung von reaktiven Flüssigkautschuken müssen diese Nebenprodukte zwar nicht abgetrennt werden, der Verbleib im System schränkt jedoch die Freiheit zur weiteren Formulierung ein, da die Glykole, welche in Epoxidharzen als Nebenbestandteil enthalten sind, durch ihre erhöhte Funktionalität zum Gelieren der Epoxidharz-terminierten Schlagzähmodifikatoren führen können. Vermutlich sind bifunktionelle OH-haltige Spezies und/oder besonders reaktive OH-haltige Spezies, insbesondere Mono-alphaglycole, die als Nebenbestandteile enthalten sind, durch ihre erhöhte Funktionalität für das beobachtete Gelieren bei den Epoxidharz-terminierten Schlagzähigkeitsmodifikatoren verantwortlich.

Im Ergebnis führt die Herstellung von Epoxidgruppen-terminierten Schlagzähigkeitsmodifikatoren auf Basis von Epoxidharzen daher häufig zu einer Gelierung und zu Inhomogenitäten der Polymere, so dass eine Verarbeitung schwierig ist.

### Darstellung der Erfindung

Aufgabe der vorliegenden Erfindung ist die Bereitstellung von Schlagzähigkeitsmodifikatoren für Epoxidharz-Zusammensetzungen, die die Probleme der Gelierung und Bildung von Inhomogenitäten nicht aufweisen, um dadurch die Prozesssicherheit zu erhöhen. Sie sollen sich vorzugsweise als Bestandteil von einkomponentigen oder zweikomponentigen Epoxidharz-Zusammensetzungen, insbesondere Klebstoffen, eignen.

Die Aufgabe konnte überraschenderweise durch ein Verfahren zur Herstellung eines einen Epoxidgruppen-terminierten Schlagzähigkeitsmodifikator enthaltenden Flüssigkautschuks gelöst werden, das die Umsetzung von einem Isocyanat-terminierten Präpolymer der Formel (II) 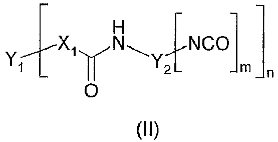
worin X₁ = O, S oder NH ist;
Y₁ für einen n-wertigen Rest eines reaktiven Polymers nach dem Entfernen endständiger Amino-, Thiol- oder Hydroxylgruppen steht;
Y₂ für einen divalenten Rest von aliphatischen, cycloaliphatischen, aromatischen oder araliphatischen Diisocyanaten nach Entfernen der Isocyanatgruppen steht, oder für einen trivalenten Rest von Trimeren oder Biureten von aliphatischen, cycloaliphatischen, aromatischen oder araliphatischen Diisocyanaten nach Entfernen der Isocyanatgruppen steht;
m = 1 oder 2 ist; und
n = 2, 3 oder 4; bevorzugt 2 oder 3, ist,
mit einem Epoxidharz, umfassend eine eine primäre oder sekundäre Hydroxygruppe enthaltende Epoxidverbindung der Formel (III) 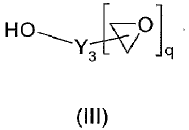
worin Y₃ für einen Rest eines eine primäre oder sekundäre Hydroxylgruppe enthaltenden aliphatischen, cycloaliphatischen, aromatischen oder araliphatischen Epoxids nach dem Entfernen der Epoxidgruppen und der primären oder sekundären Hydroxylgruppe steht; und
q = 1, 2 oder 3 ist;
in Anwesenheit mindestens einer Verbindung ausgewählt aus Anhydriden, Ketonen, und Aldehyden als Glycolfänger umfasst, wobei das Isocyanat-terminierte Präpolymer der Formel (II), das Epoxidharz und der Glycolfänger miteinander gemischt werden oder das Epoxidharz mit dem Glycolfänger umgesetzt wird, bevor sie mit dem Isocyanat-terminierten Präpolymer der Formel (II) gemischt werden.

Die Glycolfänger können theoretisch mit allen möglichen Gruppen im Epoxidharz reagieren (OH, Epoxide) und in der fertigen Klebstoffformulierung zusätzlich mit zur Härtung eingesetzten Aminen, und damit zu einer Vielzahl von möglichen Spezies führen. Es war daher überraschend, dass sie selektiv nur die im Epoxidharz enthaltenen Glykole zu blockieren scheinen, was eine derartige Herstellung prozesstechnisch erst ermöglicht.

Präpolymere sind oligomere oder auch bereits selbst polymere Verbindungen, die als Vor- oder Zwischenprodukte zur Synthese von höhermolekularen Substanzen dienen. Die Vorsilbe Poly in Ausdrücken wie Polyol oder Polyisocyanat bedeutet, dass die Verbindung zwei oder mehr der genannten Gruppen aufweist, ein Polyol ist somit eine Verbindung mit zwei oder mehr Hydroxygruppen.

Der erfindungsgemäß hergestellte Flüssigkautschuk enthält ein oder mehrere Epoxidgruppen-terminierte Schlagzähigkeitsmodifikatoren. Bei dem Flüssigkautschuk handelt es sich um einen reaktiven Flüssigkautschuk. Die Epoxidgruppen-terminierten Schlagzähigkeitsmodifikatoren umfassen vollständig blockierte oder teilweise blockierte Isocyanat-terminierte Präpolymere. Die Isocyanat-terminierten Präpolymere werden hier auch als PU-Polymere bezeichnet.

Die eingesetzten Isocyanat-terminierten Präpolymere oder PU-Polymere der Formel (II) sind das Umsetzungsprodukt von einem oder mehreren X₁H-Gruppen tragenden Verbindungen mit einem oder mehreren Polyisocyanaten. Die Umsetzung kann in einer Stufe oder in mehreren Stufen durchgeführt werden. Die eingesetzten Isocyanat-terminierten Präpolymere der Formel (II) können z.B. das Umsetzungsprodukt von X₁H-Gruppen tragenden Verbindungen der Formel (IV) und Polyisocyanaten der Formel (V) sein, wobei die Substituenten und Indices in gleicher Weise wie in Formel (II) definiert sind.

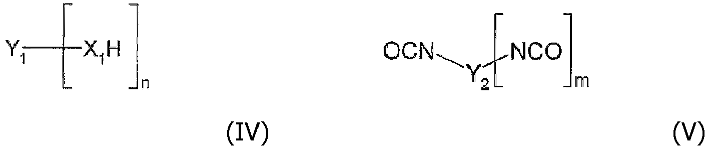

Die Verbindungen der Formel (IV) weisen Gruppen X₁H auf. Diese können unabhängig voneinander OH, SH, oder NH₂ sein. Bevorzugt sind die Amin- und Hydroxylgruppe, wobei die Hydroxylgruppe besonders bevorzugt ist. Bei den X₁H-Gruppen tragenden Verbindungen der Formel (IV) kann es sich um Präpolymere bzw. Polymere handeln.

Bevorzugte Verbindungen der Formel (IV) sind Polyole, beispielsweise die folgenden handelsüblichen Polyole oder beliebige Mischungen davon:
Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mÄq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole, insbesondere mit einem Ungesättigtheitsgrad von weniger als 0,02 mÄq/g und/oder mit einem Molekulargewicht im Bereich von 1000 bis 30.000 g/mol, Polyoxybutylendiole und -triole, Polyoxypropylendiole und -triole, insbesondere mit einem Molekulargewicht von 400 bis 8.000 g/mol, sowie sogenannte "EO-endcapped" (mit Ethylenoxid-Endgruppe versehene) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen;
Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton; und
Polycarbonatpolyole, wie sie durch Umsetzung beispielsweise der oben genannten zum Aufbau der Polyesterpolyole eingesetzten Alkohole mit Dialkylcarbonaten, Diarylcarbonaten oder Phosgen zugänglich sind.

Vorteilhaft sind die X₁H-Gruppen tragenden Verbindungen der Formel (IV) di- oder höherfunktionelle Polyole mit OH-Äquivalentgewichten von 600 bis 6.000 g/OH-Äquivalent, vorzugsweise von 700 bis 2.200 g/OH-Äquivalent. Weiterhin vorteilhaft sind die Polyole ausgewählt aus der Gruppe bestehend aus Polyethylenglycolen, Polypropylenglycolen, Polyethylenglycol-Polypropylenglycol-Blockpolymeren, Polybutylenglycolen, Hydroxyl-terminiertem Polybutadien, Hydroxyl-terminiertem Polybutadienco-acrylnitril, Hydroxyl-terminierten synthethischen Kautschuken und Gemischen der genannten Polyole.

Ferner können als Verbindungen der Formel (IV) auch di- oder höherfunktionelle Amin-terminierte Polyethylenether, Polypropylenether, Polybutylenether, Polybutadiene, Polybutadien-acrylnitril sowie weitere Amin-terminierte synthetische Kautschuke oder Gemische der genannten Komponenten verwendet werden. Besonders bevorzugt sind z.B. Polyetheramine mit zwei, drei oder vier Aminendgruppen (z.B. Jeffamine®).

Als Verbindungen der Formel (IV) sind insbesondere bevorzugt α,ω-Polyalkylenglykole mit C₂-C₆-Alkylengruppen oder mit gemischten C₂-C₆-Alkylengruppen, die mit Amino-, Thiol- oder Hydroxylgruppen, bevorzugt Hydroxylgruppen, terminiert sind. Besonders bevorzugt sind Polyetherpolyole wie Hydroxylgruppen-terminierte Polyoxybutylene und Polypropylenglycole, Hydroxylgruppen-terminiertes Polybutadien und Amin-terminierter Polyether.

In einer bevorzugten Ausführungsform wird als Verbindung der Formel (IV) eine Mischung von mindestens zwei, bevorzugt zwei oder drei Verbindungen der Formel (IV) mit X₁H = OH eingesetzt, nämlich mindestens ein Polyetherpolyol in Kombination mit mindestens einem OH-terminierten Kautschuk, wobei das Gewichtsverhältnis von Polyetherpolyol zu OH-terminiertem Kautschuk bevorzugt im Bereich von 7:3 bis 2:8 liegt. Damit lassen sich die mechanischen Eigenschaften verbessern. Polyetherpolyole und OH-terminierte Kautschuke wurden vorstehend bereits genannt. Nachstehend werden Polyetherpolyole und OH-terminierte Kautschuke genannt, die sich besonders für die genannte Kombination eignen, aber auch gegebenenfalls allein eingesetzt werden können.

Es können ein oder mehrere Polyetherpolyole eingesetzt werden. Besonders bevorzugte Polyetherpolyole sind Polymerisationsprodukte von Ethylenoxid, 1,2-Propylenoxid, 1,2- oder 2,3-Butylenoxid, Tetrahydrofuran oder Mischungen davon, besonders bevorzugt sind Polypropylenoxide und Polytetrahydrofurane. Solche Polyetherpolyole sind im Handel erhältlich. Im Handel erhältliche Polytetrahydrofurane sind z. B. die PolyTHF®-Produkte von BASF wie PolyTHF®2000, PolyTHF®2500 CO oder PolyTHF®3000 CO. Im Handel erhältliche Polypropylenoxide sind z.B. Caradol®-Produkte von Shell, wie Caradol®2000 oder Caradol®ED56, oder Acdaim®-Produkte von Bayer wie Acclaim®-Polyol 2200, Acclaim®-Polyol 12200 oder Acclaim®-Polyol 4200. Weitere mögliche Polyetherpolyole sind Voranol®1010L, Voranol® EP1900 oder Voranol®CP4755 von Dow.

Das mittlere Molekulargewicht der eingesetzten Polyetherpolyole kann variieren. Die Polyetherpolyole besitzen z.B. ein Gewichtsmittel des Molekulargewichts (Mw) im Bereich von 500 bis 5000 g/mol, bevorzugter 1000 bis 3000 g/mol und besonders bevorzugt im Bereich von 1.500 bis 2.500 g/mol, insbesondere etwa 2000 g/mol.

Sofern nicht anders angegeben wird in der vorliegenden Anmeldung das Gewichtsmittel des Molekulargewichts mittels GPC Methode bestimmt. Dies ist eine Art der Flüssigchromatographie bei der unterschiedlich große Moleküle aufgrund ihrer unterschiedlichen Diffusionsvolumina aufgetrennt werden. Dazu werden je nach zu bestimmenden Polymer unterschiedliche Trennsäulen verwendet: Säulen: SDV 100, 1000, 10⁴ Å, (0,8 x 30 cm, 5 µm); Eluent: THF; Fluss: 1 mL/min; Temperatur: 35 °C; Kalibration relativ zu Poly(1,4-butadien)-Standards: 831 - 1.060.000 g/mol; Probenvorbereitung: Ca. 100 mg Probe wurde in 10 mL THF gelöst und mit einem 0,45 µm PTFE-Membranfilter filtriert.

Die OH-Funktionalität der eingesetzten Polyetherpolyole liegt bevorzugt im Bereich von etwa 2, z.B. im Bereich von 1,9 bis 2,1. Gegebenenfalls kann eine Verbindung mit einer OH-Funktionalität von 3, wie z.B. butoxyliertes Trimethylolpropan (z.B. Simulsol®TOMB), zu dem Polyetherpolyol zugemischt werden, um die OH-Funktionalität zu erhöhen.

Die OH-Funktionalität kann z.B. gemessen werden mittels Titration. Die Hydroxylgruppen enthaltende Substanz wird mit einem Überschuss an Diisocyanat umgesetzt und nach der Reaktion wird der Isocyanatüberschuss mit Hilfe von 0,1 M HCl Lösung titrimetrisch bestimmt und die Hydroxylzahl berechnet.

Es können ein oder mehrere OH-terminierte Kautschuke eingesetzt werden, wobei der Einsatz von zwei OH-terminierten Kautschuken, insbesondere zwei OH-terminierten Polybutadienen, zu besonders günstigen Eigenschaften führen. Unter OH-terminierten Kautschuken werden hier z.B. und bevorzugt Hydroxyl-terminierte Polybutadiene und auf Rizinusöl basierte Polyole verstanden, wobei Hydroxyl-terminierte Polybutadiene besonders bevorzugt sind. Rizinusöl ist ein Triglycerid, dessen OH-Funktionalität auf der Hydroxygruppe der Rizinusölsäure beruht, und daher ein Polyol darstellt. Rizinusöl ist ein Naturprodukt, das in verschiedenen Qualitäten erhältlich ist, z.B. in Standardqualität, als entwässertes Produkt oder mit sehr niedriger Säurezahl. Es sind auch derivatisierte Rizinusölprodukte erhältlich, z.B. oxidativ polymerisiertes Rizinusöl oder teilweise dehydratisiertes Rizinusöl, wodurch z.B. eine niedrigere OH-Funktionalität eingestellt werden kann. Auf Rizinusöl basierte Polyole umfassen Rizinusöl in den verschiedenen Qualitäten und Rizinusölderivate.

Im Handel erhältliche Hydroxyl-terminierte Polybutadiene sind z.B. die Poly bd®- und Krasol®-Produkte von Cray Valley wie Krasol® LBH-P 2000 oder Poly bd® R45V. Rizinusöl-basierte Polyole sind z.B. die Albodur®-Produkte von Alberdingk Boley, wie Albodur®901, oder die Polycine®-Produkte von Baker Castor Oil Company, wie Polycine®-GR80.

Die eingesetzten Hydroxyl-terminierten Kautschuke weisen bevorzugt ein Gewichtsmittel des Molekulargewichts (Mw) von weniger als 15.000 g/mol und bevorzugt weniger als 4.000 g/mol auf.

Die OH-Funktionalität der eingesetzten Hydroxyl-terminierten Kautschuke liegt bevorzugt im Bereich von 1,7 bis 2,2 für anionisch hergestellte Typen oder von 2,2 bis 2,8 für radikalisch hergestellte Typen. Wenn der Epoxidgruppen-terminierte Schlagzähigkeitsmodifikator in einem 2K-Epoxidharzklebstoff eingesetzt wird, wird bevorzugt ein Hydroxyl-terminierter Kautschuk, insbesondere ein Hydroxyl-terminiertes Butadien, mit einer OH-Funktionalität von kleiner gleich 2 verwendet. Wenn der Epoxidgruppen-terminierte Schlagzähigkeitsmodifikator in einem 1K-Epoxidharzklebstoff eingesetzt wird, wird bevorzugt ein Hydroxyl-terminierter Kautschuk, insbesondere ein Hydroxyl-terminiertes Butadien, mit einer OH-Funktionalität im Bereich von 2,4 bis 2,8 verwendet. Die genannte bevorzugte OH-Funktionalität für 2K- und 1K-Epoxidharzklebstoff kann auch im Rahmen einer Mischung von zwei Hydroxyl-terminierten Kautschuken, insbesondere Hydroxyl-terminierten Butadienen, erreicht werden.

Das Gewichtsverhältnis von Polyetherpolyol zu Hydroxyl-terminiertem Kautschuk liegt bevorzugt im Bereich von 7:3 bis 2:8, bevorzugter 7:3 bis 4:6 und besonders bevorzugt 7:3 bis 5:5. Auf diese Weise können die mechanischen Eigenschaften des gehärteten Klebstoffs verbessert werden, insbesondere die Schlagschälarbeit bei -30°C.

Das Isocyanat-terminierte Präpolymer ist aus der Umsetzung der X₁H tragenden Verbindung mit einem Polyisocyanat erhältlich. Geeignete Polyisocyanate der Formel (V) sind Diisocyanate oder Triisocyanate. Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IP-DI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylendiisocyanat (TMXDI) usw. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Eine weitere Möglichkeit für Y₁ in Formel (II) bzw. (IV) sind kettenverlängerte Reste von Molekülen nach Entfernung der X₁H-Gruppen, die formal durch eine Reaktion ähnlich der Umsetzung zwischen den bereits oben erwähnten Di- oder Triolen und/oder Di- oder Triaminen sowie den bereits erwähnten Di- oder Triisocyanaten erhältlich sind. Dies wird durch Variation der Stöchiometrie der Reaktionspartner erreicht, wofür es zwei Möglichkeiten gibt.

Einerseits können durch einen Überschuss der X₁H-Gruppen bezogen auf die NCO-Gruppen OH-funktionelle Polymere mit unterschiedlich langen Ketten erhalten werden. Solche kettenverlängerte Polyole oder Polyamine der Formel (IV) enthalten Urethan- oder Harnstoff-Gruppen in der Kette und können mit anderen Di- oder Triisocyanaten weiter umgesetzt werden, so dass Polymere der Formel (II) entstehen. Anderseits können durch einen Unterschuss der X₁H-Gruppen bezogen auf die NCO-Gruppen NCO-funktionelle Polymere mit unterschiedlich langen Ketten erhalten werden.

Die Kettenlänge und Vernetzungsgrad dieser kettenverlängerten Polymere der Formel (II) bzw. (IV) ist stark abhängig vom molaren Verhältnis [X₁H]/[NCO]. Die Ketten sind umso länger je näher dieses Verhältnis bei 1 ist. Es ist dem Fachmann klar, dass zu lange Ketten bzw. ein zu hoher Vernetzungsgrad zu nicht mehr verwendbaren Polymeren führen würde. Für die Kettenverlängerung werden insbesondere Diole oder Diamine und Diisocyanate bevorzugt.

Die Isocyanat-terminierte Verbindung der Formel (II) ist bevorzugt erhältlich durch Umsetzung eines X₁H-Gruppen tragenden Präpolymers ausgewählt aus Polyetherpolyolen, Polybutadienpolyolen, Polyesterpolyolen, Polycarbonatpolyolen, NH-terminierten Polyethern und Mischungen davon mit einem oder mehreren Polyisocyanaten, insbesondere Di- und/oder Triisocyanaten. Bevorzugt erfolgt die Isocyanat-terminierung der OH-, SH- oder NH-terminierten Polymere, insbesondere der vorstehend genannten, wie z.B. Polypropylenglykole, Jeffamine, Hydroxy-terminierte Polybutadiene usw., mit aromatischen oder aliphatischen Di- oder Triisocyanaten, wie z.B. IPDI, HDI, MDI, TDI usw.

In einer alternativen Ausführungsform kann für die Herstellung der Isocyanat-terminierten Verbindung der Formel (II) neben dem X₁H-Gruppen tragenden Präpolymer und dem Polyisocyanat wie vorstehend beschrieben zusätzlich ein Polyphenol zur Umsetzung zugemischt werden. Die Polyphenole sind z.B. Bis-, Tris- und/oder Tetraphenole, wobei es sich um unsubstituierte oder substituierte Polyphenole handeln kann. In diesem Fall erhält man Isocyanat-terminierte Verbindungen der Formel (II), in denen mindestens ein aromatisches Strukturelement enthalten ist, welches über Urethangruppen in der Polymerkette eingebunden ist. Solche Verbindungen sind in der WO 2005/007720 ausführlich beschrieben, worauf hiermit Bezug genommen wird, insbesondere bezüglich der Einzelheiten der Herstellung und der einsetzbaren Komponenten. So sind geeignete Polyphenole und geeignete Herstellungswege auf den Seiten 9 und 10 bzw. 13 und 14 dieser Druckschrift beschrieben.

Zur Herstellung des einen Epoxidgruppen-terminierten Schlagzähigkeitsmodifikator enthaltenden Flüssigkautschuks werden ein oder mehrere Isocyanat-terminierte Präpolymere mit einem Epoxidharz umgesetzt, das eine Epoxid-Verbindung enthält, die eine primäre oder sekundäre Hydroxylgruppe aufweist. Die Hydroxy-Epoxidverbindung der Formel (III) weist 1, 2 oder 3 Epoxygruppen auf. Die Hydroxygruppe dieser Hydroxy-Epoxidverbindung (III) kann eine primäre oder eine sekundäre Hydroxylgruppe darstellen. Die Hydroxy-Epoxidverbindung der Formel (III) ist bevorzugt eine Monohydroxy-Epoxidverbindung.

Das Epoxidharz zur Umsetzung mit dem Isocyanat-terminierten Präpolymer kann ein Epoxidharz oder eine Mischung aus zwei oder mehr Epoxidharzen sein. Das Epoxidharz ist insbesondere ein flüssiges Epoxidharz. Das Epoxidharz enthält oder besteht aus Hydroxyl-haltigen Spezies, insbesondere die Hydroxyl-Epoxidverbindung der Formel (III). Es kann sich bei dem Epoxidharz bzw. Epoxid-Flüssigharz um ein im Handel erhältliches Epoxidharz-Produkt handeln.

Epoxidharze werden z.B. aus der Umsetzung einer Epoxidverbindung wie z.B. Epichlorhydrin mit einem mehrfunktionellen Alkohol, d.h. einem Diol, Triol oder Polyol, erhalten. Je nach Reaktionsführung entstehen bei der Umsetzung von mehrfunktionellen Alkoholen mit einer Epoxidverbindung wie z.B. Epichlorhydrin als Nebenprodukte auch die entsprechenden Hydroxy-Epoxidverbindungen in unterschiedlichen Konzentrationen. Diese lassen sich durch übliche Trennoperationen isolieren. Erfindungsgemäß kann aber das bei der Glycidylisierungsreaktion von Polyolen erhaltene Produktgemisch aus vollständig und partiell zum Glycidylether reagiertem Polyol eingesetzt werden. Beispiele solcher hydroxylhaltigen Epoxide in Epoxidharzen sind Trimethylolpropandiglycidylether als Gemisch enthalten in Trimethylolpropantriglycidylether, Glycerindiglycidylether als Gemisch enthalten in Glycerintriglycidylether, Pentaerythrittriglycidylether als Gemisch enthalten in Pentaerythrittetraglycidylether. Das hydroxylhaltigen Epoxid ist in einer bevorzugten Ausführungsform Trimethylolpropandiglycidylether, welcher zu einem relativ hohen Anteil in üblich hergestellten Trimethylolpropantriglycidylether vorkommt. Es können aber auch andere ähnliche hydroxylhaltige Epoxide, insbesondere Glycidol, 3-Glycidyloxybenzylalkohol oder Hydroxymethyl-cyclohexenoxid eingesetzt werden. Bevorzugt sind Epoxidharze umfassend Trimethylolpropandiglycidylether, Butandioldiglycidylether, Cyclohexandimethanoldiglycidylether oder Mischungen davon.

Es können weitere Epoxid-Flüssigharze der Formel (VII) verwendet werden, die weiter unten für die Epoxidharze (A) beschrieben werden, die eine eine primäre oder sekundäre Hydroxygruppe enthaltende Epoxidverbindung der Formel (III) enthalten.

Besonders bevorzugt sind Epoxidharze auf Basis von Diglycidylether von Bisphenol A (BADGE), Bisphenol F oder Bisphenol A/F. Diese Epoxidharze sind in großem Umfang im Handel erhältlich. Sie können aus der Umsetzung von Bisphenol A, Bisphenol F oder Mischungen von Bisphenol A und Bisphenol F (auch als Bisphenol A/F bezeichnet) mit Epichlorhydrin erhalten werden. Es können je nach Reaktionsführung hoch- oder niedermolekulare Reaktionsprodukte hergestellt werden.

Besonders bevorzugt als Hydroxy-Epoxidverbindung der Formel (III) ist der β-Hydroxyether der Formel (VI) 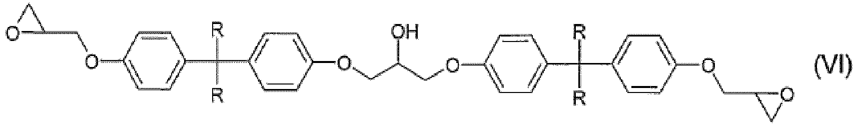 worin R unabhängig voneinander H oder Methyl ist, der in handelsüblichen flüssigen Epoxidharzen hergestellt aus Bisphenol-A (R = CH₃) und Epichlorhydrin zu etwa 15 % enthalten ist, sowie die entsprechenden β-Hydroxyether, die bei der Reaktion von Bisphenol-F (R = H) oder des Gemisches von Bisphenol-A und Bisphenol-F mit Epichlorhydrin gebildet werden. Neben dem Dimer des Bisphenol A-diglycidylethers und dem entsprechenden Dimer mit Bisphenol F oder Mischungen von Bisphenol A und Bisphenol F gemäß der Formel (VI) können auch verlängerte Produkte der BADGE-Bisphenol-A Addition bzw. entsprechende Produkte mit Bisphenol F verwendet werden, die z.B. 3 oder 4 Bisphenol-Einheiten enthalten. Eine derartige Verlängerung erfolgt insbesondere, wenn ein Diglycidylether, insbesondere ein Diglycidylether von Bisphenol-A (BADGE) oder von Bisphenol-F mit einem Bisphenol bei erhöhter Temperatur umgesetzt werden. Es ist vorteilhaft, dass ein derartiger Bisphenol-verlängerter Diglycidylether mit nicht verlängertem Diglycidylether eingesetzt wird.

Dementsprechend werden bevorzugt Epoxid-Flüssigharze der Formel (A-I) als Epoxidharze eingesetzt 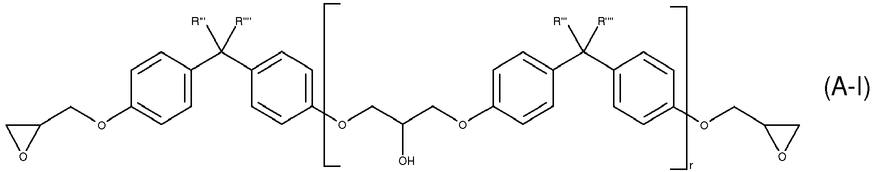 worin die Substituenten R'" und R"" unabhängig voneinander entweder für H oder CH₃ stehen und der Index r einen Wert von 0,01 bis 1, bevorzugt 0,05 bis 1, aufweist. Bevorzugt steht r für einen Wert von kleiner als 1, insbesondere kleiner 0,3 und bevorzugt kleiner 0,2. Der Ausdruck "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Solche Epoxid-Flüssigharze der Formel (A-I) sind handelsübliche Produkte, z.B. Araldite® GY 250, Araldite® PY 304, Araldite® GY 282 (Huntsman, bzw. Hexion) oder D.E.R.® 331, D.E.R.® 330 oder D.E.R.® 332 (Dow) oder Epikote® 828 (Hexion).

In einer weiteren bevorzugten Ausführungsform können Epoxidharze verwendet werden, die sich aus der Umsetzung von Monophenolen und Epoxidharzen ergeben, wie sie beispielsweise durch Umsatz von p-Methoxyphenol und D.E.R. 332 erhalten wurde. Des Weiteren können auch unterschiedlichste Epoxide mit einer Hydroxyether-Gruppe, hergestellt durch die Reaktion von (Poly-)Epoxiden mit einem Unterschuss von einwertigen Nukleophilen wie Carbonsäuren, Phenolen, Thiolen oder sek.-Aminen, eingesetzt werden. In einer weiteren Ausführungsform können auch Destillationsrückstände, welche bei der Herstellung hochreiner destillierter Epoxidharze anfallen, eingesetzt werden. Derartige Destillationsrückstände wie z. B. Epilox® M850 enthalten deutlich höhere Konzentrationen an hydroxyhaltigen Epoxyverbindungen als Standardepoxidharze.

Die freie primäre oder sekundäre OH-Funktionalität der Hydroxy-Epoxidverbindung der Formel (III) lässt eine effiziente Umsetzung mit terminalen Isocyanatgruppen von Präpolymeren zu, ohne dafür unverhältnismäßige Überschüsse der Epoxidkomponente einsetzen zu müssen.

Zur Umsetzung der Isocyanat-terminierten Präpolymere der Formel (II) können entsprechende Mengen des Epoxidharzes enthaltend hydroxylhaltige Epoxide der Formel (III), bevorzugt Monohydroxy-Epoxide, eingesetzt werden. Es kann eine äquimolare Stöchiometrie bezüglich der Isocyanatgruppen und der Hydroxylgruppen verwendet werden, d.h. ein molares Verhältnis [OH]/[NCO] von 1, hiervon kann jedoch abgewichen werden. Das Verhältnis [OH]/[NCO] beträgt z.B. geeigneterweise 0,6 bis 3,0, vorzugsweise 0,7 bis 1,5 und insbesondere 0,8 bis 1,2.

Der erhaltene Flüssigkautschuk mit dem Epoxidgruppen-terminierten Polymer weist vorteilhaft einen elastischen Charakter auf und ist weiterhin vorteilhaft in Epoxidharzen löslich oder dispergierbar. Der Flüssigkautschuk kann bei Bedarf und je nach der resultierenden Viskosität mit weiteren Epoxidharzen verdünnt werden. Bevorzugt sind hierzu Diglycidylether von Bisphenol-A, Bisphenol-F sowie von Bisphenol-A/F, und weiter unten beschriebenen epoxidgruppentragenden Reaktivverdünner, insbesondere Hexandioldiglycidylether, Polypropylenglykoldiglycidylether und Trimethylolpropantriglycidylether.

Erfindungsgemäß wird bei der Synthese der Epoxidharz-terminierten Polyurethan-Polymere mindestens einer Verbindung ausgewählt aus Anhydriden, Ketonen und Aldehyden als Glycolfänger eingesetzt. Die Abfangreaktion von im Epoxidharz enthaltenen Glykolen basiert bei Einsatz von einem Anhydrid auf der thermodynamisch besonders begünstigten Bildung von cyclischen Esterfunktionalitäten zwischen Säureanhydriden und Glykolen. In Analogie zu dieser Abfangreaktion können die in den Epoxidharzen enthaltenen Glycole alternativ durch Umsatz mit Ketonen und Aldehyden als Ketale oder Acetale gebunden werden. Die Herstellung der Epoxidgruppen-terminierten Flüssigkautschuke ohne Glycolfänger führt zu einer deutlichen Gelierung und Inhomogenitäten der Polymere.

Die Umsetzung des Isocyanat-terminierten Präpolymers mit dem Epoxidharz, das die Hydroxy-Epoxidverbindung enthält, wird in Anwesenheit des Glycolfängers durchgeführt. Hierzu können das Isocyanat-terminierte Präpolymer, das Epoxidharz und der Glycolfänger vor der Umsetzung miteinander gemischt werden , um die Reaktionsmischung zu bilden, wobei die Reihenfolge der Zugaben beliebig ist. Beispielsweise kann zunächst das Isocyanat-terminierte Präpolymer zur Hydroxy-Epoxidverbindung gegeben werden und dann der Glycolfänger zugesetzt werden, wonach eine Mischung durch Rühren erfolgt.

In einer alternativen Ausführungsform kann die Anwesenheit des Glycolfängers dadurch erreicht werden, dass das Epoxidharz, das die Hydroxy-Epoxidverbindung der Formel (III) enthält, zunächst mit dem Glycolfänger umgesetzt wird, und das erhaltene Umsetzungsprodukt dann mit dem Isocyanat-terminiertem Präpolymer der Formel (II) gemischt und umgesetzt wird.

Bevorzugt wird ein Anhydrid als Glycolfänger eingesetzt. Bei dem Anhydrid handelt es sich um ein organisches Anhydrid, d.h. ein Carbonsäureanhydrid. Es kann ein Anhydrid oder eine Mischung verschiedener Anhydride eingesetzt werden. Prinzipiell eignet sich eine breite Palette von Anhydriden als Fänger glycolhaltiger Spezies in Epoxidharzen oder Epoxidharzmischungen. So können aromatische, cycloaliphatische, aliphatische oder difunktionelle Anhydride eingesetzt werden.

Es können auch gemischte Anhydride eingesetzt werden, in der Regel sind aber von einer Carbonsäure abgeleitete Anhydride bevorzugt. Besonders bevorzugt sind cyclische Anhydride und Derivate davon. Solche cyclischen Anhydride sind gewöhnlich aus Dicarbonsäuren abgeleitet. Unter Derivate werden substituierte Anhydride, z.B. substituiert mit C₁-C₁₈-Alkylgruppen, C₁-C₁₈-Alkenylgruppen, Arylgruppen, ankondensierten alicyclischen oder aromatischen Ringen, und/oder Anhydride, bei denen aromatische Gruppen teilweise oder vollständig hydriert sind, verstanden. Beispiele für geeignete Anhydride sind Alkansäureanhydride, wie C₂-C₁₈-Alkansäureanhydride, und Derivate davon, z.B. Essigsäureanhydrid, Propionsäureanhydrid, Buttersäureanhydrid, Valeriansäureanhydrid und Stearinsäureanhydrid, Alkandisäureanhydride, wie C₄-C₈-Alkandisäureanhydride, und Derivate davon, z.B. Bernsteinsäureanhydrid, Methylbernsteinsäureanhydrid, (2-Dodecen-1-yl)bernsteinsäureanhydrid, Phenylbernsteinsäureanhydrid, Glutarsäureanhydrid, Methylglutarsäureanhydrid, 3,3-Dimethylglutarsäureanhydrid und Itaconsäureanhydrid, Alkendisäureanhydride, wie C₄-C₈-Alkendisäureanhydride, und Derivate davon, z.B. Maleinsäureanhydrid, 2,3-Dimethylmaleinsäureanhydrid, Citraconsäureanhydrid, alicyclische Dicarbonsäureanhydride und Derivate davon, wie Cyclohexandicarbonsäureanhydrid, Norbornen-2,3-dicarbonsäureanhydrid, Methylnorbornen-2,3-dicarbonsäureanhydrid, Camphersäureanhydrid, aromatische Anhydride und Derivate davon, wie Benzoesäureanhydrid, Phtalsäureanhydrid und Derivate davon, wie Methylphthalsäureanhydrid (MPA), Methyltetrahydrophtalsäureanhydrid (MTHPA), Tetrahydrophtalsäureanhydrid, Tetraphenylphthalsäureanhydrid, Methylhexahydrophthalsäureanhydrid (MHHPA) und Hexahydrophthalsäureanhydrid, Homophthalsäureanhydrid, 1,2-Naphthalsäureanhydrid und Derivate davon wie 3,4-Dihydro-1,2-naphthalsäureanhydrid, difunktionelle Anhydride, wie Pyromellitsäuredianhydrid, Benzophenontetracarbonsäuredianhydrid und Biphenyltetracarbonsäuredianhydrid und Diglycolsäureanhydrid. Bevorzugte Anhydride sind Bernsteinsäureanhydrid, Phthalsäureanhydrid und Derivate davon, insbesondere Methylphthalsäureanhydrid bzw. 4-Methylphthalsäureanhydrid. Das Anhydrid umfasst bevorzugt den Bernsteinsäureanhydridring oder Maleinsäureanhydridring als Strukturelement.

Beispiele für Ketone und Aldehyde, die erfindungsgemäß als Glycolfänger eingesetzt werden können, sind Formaldehyd, Aceton, Cyclopentanon oder Benzaldehyd, die Glycole unter Bildung von cyclischen 1,3-Dioxolanen binden können.

Die Menge des Glycolfängers in der Reaktionsmischung umfassend das Isocyanat-terminierte Präpolymer der Formel (II) und das Epoxidharz kann in weiten Bereichen variieren und hängt von der Art der eingesetzten speziellen Reaktionspartnern, ihrem Verhältnis und der Art des Glycolfängers ab. Beispielsweise werden mindestens 0,1 Gew.-%, bevorzugter mindestens 0,25 Gew.-% und besonders bevorzugt mindestens 0,4 Gew.-%, und nicht mehr als 5,0 Gew.-%, bevorzugt nicht mehr als 3,0 Gew.-% und bevorzugter nicht mehr als 2,50 oder 2,75 Gew.-% Glycolfänger, bevorzugt Anhydrid, bezogen auf die Menge an eingesetztem Epoxidharz, verwendet. Besonders bevorzugt ist der Einsatz von 0,25 bis 3,00 Gew.-%, bevorzugter 0,50 bis 1,50 Gew.-% Glycolfänger, bevorzugt Anhydrid, bezogen auf die Menge an eingesetztem Epoxidharz. Bei einer zu geringen Menge wird die Gelierung nicht oder in zu geringer Weise verhindert. Bei einer zu großen Menge Glycolfänger bildet sich nach einer gewissen Zeit infolge Abreaktion, d.h. eines zu hohen Isocyanat-Gehalts, eine Haut durch Vernetzungsreaktion des Isocyanats mit Luftfeuchtigkeit aus.

Durch die Kombination des Herstellungsprozesses der Umsetzung von Isocyanat-terminierten Präpolymeren mit OH-funktionellen Epoxiden aus dem Epoxidharz mit dem Glykolfänger wird eine ungewollte Quervernetzung, welche zur Gelierung führt, verhindert oder minimiert. Gelierungen führen dazu, dass die Präpolymere in einem Klebstoff nicht eingesetzt werden können, da die Verarbeitung nicht mehr gewährleistet ist.

Wie vorstehend erläutert, kann die Stöchiometrie der Isocyanat-terminierten Präpolymere und der OH-funktionellen Epoxide in dem Epoxidharz bei der Umsetzung so gesteuert werden, dass vollständig blockierte Polymere erhalten werden. Ebenfalls erfindungsgemäß sind teilblockierte Polymere, bei denen ein Teil der Isocyanatgruppen für Reaktionen in einem späteren Reaktionsschritt unreagiert belassen bleibt. Die nachstehende Verbindung der Formel (I) repräsentiert vollständig blockierte Polymere, die bei der erfindungsgemäßen Umsetzung erhalten werden können, wobei die Substituenten und Indices wie in den Formeln (II) und (III) definiert sind. Die nur teilweise blockierten Polymere entsprechen der Verbindung der Formel (I), wobei aber nicht alle Isocyanatgruppen durch die Hydroxy-Epoxidverbindung blockiert sind.

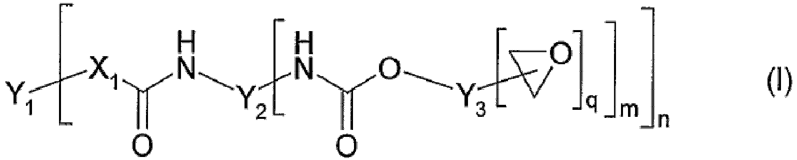

Gemäß dem erfindungsgemäßen Verfahren sind Flüssigkautschuke umfassend blockierte oder teilblockierte Isocyanat-terminierte Präpolymere erhältlich, die als Epoxidgruppen-terminierter Schlagzähigkeitsmodifikator in einer einkomponentigen oder zweikomponentigen Epoxidharzzusammensetzung, zur Erhöhung der Schlagzähigkeit der gehärteten Epoxidharzmatrix verwendet werden können. Es handelt sich bevorzugt um eine 2K-Epoxidharzzusammensetzung. Die 2K oder 1K Epoxidharzzusammensetzung kann flüssig, pastös oder fest und/oder kalt- oder hitzehärtend sein.

Die Epoxidharzzusammensetzung ist bevorzugt ein 1K oder 2K Epoxidharzklebstoff, insbesondere ein struktureller bzw. crashfester Klebstoff, z.B. für OEM-Produkte, EP/PU-Hybride, Strukturschäume aus Epoxidharzsystemen (wie Sika Reinforcer®) oder Reparaturanwendungen.

Die erfindungsgemäße einkomponentige oder zweikomponentige Epoxidharz-Zusammensetzung umfasst mindestens den erfindungsgemäßen Flüssigkautschuk. Des Weiteren umfassen die erfindungsgemäßen Epoxidzusammensetzungen mindestens einen Härter für Epoxidharze, der sich bei einer einkomponentigen Zusammensetzung in derselben Komponente wie der Flüssigkautschuk befindet oder bei einer zweikomponentigen Zusammensetzung in der zweiten Komponente.

Je nach Epoxidharz, das für die Herstellung des Flüssigkautschuks eingesetzt wurde, braucht neben dem erfindungsgemäßen Flüssigkautschuk in der 1K oder 2K Epoxidharzzusammensetzung kein weiteres Epoxidharz zugesetzt werden. Gegebenenfalls und bevorzugt kann aber auch ein zusätzliches Epoxidharz (A) aufgenommen werden. Das zusätzliche Epoxidharz (A) kann ein Epoxid-Flüssigharz oder Epoxid-Festharz sein. Als Epoxidharz (A) eignen sich alle Epoxidharze, die bereits vorstehend als Epoxidharze für die Umsetzung mit dem Isocyanat-terminierten Präpolymer beschrieben wurden. Im Folgenden werden weitere geeignete Komponenten und deren Anteile für die Epoxidharz-Zusammensetzung beschrieben, die ebenso für den bevorzugten Epoxidharz-Klebstoff gelten.

Als Epoxid-Flüssigharz oder Epoxid-Festharz (A) gelten insbesondere die Diglycidylether der Formel (VII) 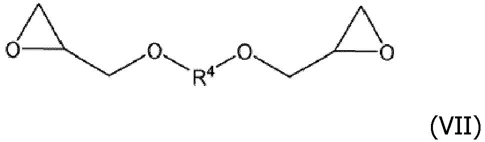 worin R⁴ für einen zweiwertigen aliphatischen oder einkernigen aromatischen oder einen zweikernigen aromatischen Rest steht.

Als Diglycidylether der Formel (VII) gelten insbesondere
- Diglycidylether von difunktionellen gesättigten oder ungesättigten, verzweigten oder unverzweigten, zyklischen oder offenkettigen C₂-C₃₀-Alkoholen, wie beispielsweise Ethylenglykol-, Butandiol-, Hexandiol-, Oktandiolgylcidylether, Cyclohexandimethanoldigylcidylether, Neopentylglycoldiglycidylether;
- Diglycidylether von difunktionellen, nieder- bis hochmolekularen Polyetherpolyolen wie beispielsweise Polyethylenglycol-diglycidylether, Polypropyleneglycol-diglycidylether;
- Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen. Als Bisphenole und gegebenenfalls Triphenolen sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-Bis(p-hydroxyphenyl)phthalide, 5,5-Bis(4-hydroxyphenyl)hexahydro-4,7-methanoindan, Phenolpthalein, Fluorescein, 4,4'-[Bis-(hydroxyphenyl)-1,3-phenylenebis-(1-methyl-ethyliden)] (=Bisphenol-M), 4,4'-[Bis-(hydroxyphenyl)-1,4-phenylenebis-(1-methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

Besonders bevorzugt als Diglycidylether der Formel (VII) sind Epoxid-Flüssigharze der Formel (A-I) und Epoxid-Festharze der Formel (A-Il).

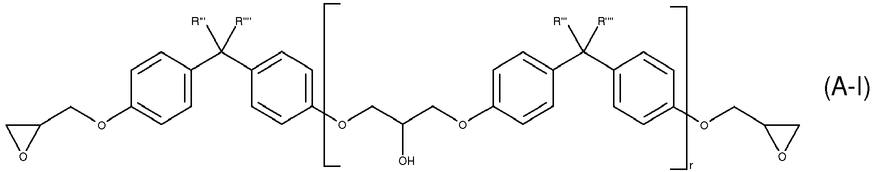

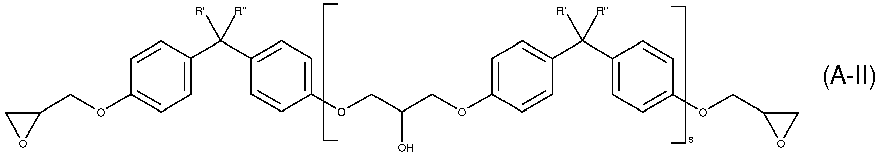

Hierbei stehen die Substituenten R', R", R'" und R"" unabhängig voneinander entweder für H oder CH₃. Weiterhin steht der Index r für einen Wert von 0 bis 1. Bevorzugt steht r für einen Wert von kleiner als 0,2. Weiterhin steht der Index s für einen Wert von >1, insbesondere > 1,5, insbesondere von 2 bis 12.

Verbindungen der Formel (A-II) mit einem Index s zwischen 1 und 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von > 1,5 aufweist.

Derartige Epoxid-Festharze sind kommerziell erhältlich beispielsweise von Dow oder Huntsman oder Hexion. Handelsübliche Epoxid-Flüssigharze der Formel (A-I) wurden bereits vorstehend genannt.

Bevorzugt handelt es beim Diglycidylether der Formel (VII) um einen Epoxid-Flüssigharz, insbesondere um einen Diglycidylether von Bisphenol-A (BADGE), von Bisphenol-F sowie von Bisphenol-A/F.

Als Härter für Epoxidharzzusammensetzungen gelten in einer Ausführungsform insbesondere Polyamine, Polymercaptane, Polyamidoamine, aminofunktionelle Polyamin/Polyepoxid-Addukte, wie sie dem Fachmann als Härter bestens bekannt sind. In dieser Ausführungsform stellt die Zusammensetzung eine zweikomponentige Epoxidharzzusammensetzung dar, welche aus zwei Komponenten, d.h. einer ersten Komponente (K1) und einer zweiten Komponente (K2) besteht. Die erste Komponente (K1) umfasst zumindest den Flüssigkautschuk gemäß der Erfindung und gegebenenfalls ein zusätzliches Epoxid-Flüssigharz und/oder Epoxid-Festharz (A). Die zweite Komponente (K2) umfasst zumindest einen Härter für Epoxidharze. Die erste Komponente (K1) und die zweite Komponente (K2) werden je in einem individuellen Behälter aufbewahrt. Erst beim Zeitpunkt des Gebrauchs werden die zwei Komponenten miteinander gemischt und die reaktiven Bestandteile reagieren miteinander und führen so zu einer Vernetzung der Zusammensetzung. Derartige zweikomponentige Epoxidharzzusammensetzungen sind bereits bei tiefen Temperaturen, typischerweise zwischen 0 °C bis 100 °C, insbesondere bei Raumtemperatur, aushärtbar. In dieser Ausführungsform erfolgt die Härtung durch eine Additionsreaktion zwischen Härter und der in der Zusammensetzung vorhandenen Epoxidgruppen aufweisenden Verbindungen. Somit ist es in dieser Ausführungsform besonders vorteilhaft, wenn die Menge des Härters in der gesamten Zusammensetzung so bemessen ist, dass die Epoxid-reaktiven Gruppen in einem stöchiometrischen Verhältnis zu den EpoxidGruppen stehen.

In einer alternativen Ausführungsform, insbesondere für die einkomponentige Zusammensetzung, stellt der Härter für Epoxidharze einen dar, welcher durch erhöhte Temperatur aktiviert wird. In dieser Ausführungsform stellt die Zusammensetzung eine hitzehärtende Epoxidharzzusammensetzung dar. Unter "erhöhter Temperatur" wird in diesem Dokument in der Regel eine Temperatur über 100 °C, insbesondere zwischen 110 °C und 200 °C, verstanden. Beim Härter für Epoxidharze, welcher durch erhöhte Temperatur aktiviert wird, handelt es sich vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron) aber auch aliphatisch substituierte Harnstoffe. Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim dem durch Hitze aktivierbaren Härter um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron) oder auch aliphatisch substituierte Harnstoffe, sowie Imidazole und Amin-Komplexe. Besonders bevorzugt als Härter ist Dicyandiamid.

Vorteilhaft beträgt der Gesamtanteil des Härters für Epoxidharze, welcher durch erhöhte Temperatur aktiviert wird, 0,5 bis 12 Gewichts-%, vorzugsweise 1 bis 8 Gewichts-%, bezogen auf das Gewicht der gesamten Zusammensetzung.

Bevorzugt ist, dass die Zusammensetzung weiterhin mindestens einen zusätzlichen optionalen Schlagzähigkeitsmodifikator (SM) umfasst, welcher verschieden von den bereits beschriebenen Epoxid-terminierten Schlagzähigkeitsmodifikator im erfindungsgemäßen Flüssigkautschuk ist. Die zusätzlichen Schlagzähigkeitsmodifikatoren (SM) können fest oder flüssig sein.

In einer Ausführungsform ist dieser zusätzliche Schlagzähigkeitsmodifikator (SM) ein Flüssigkautschuk (SM1), welcher ein carboxyl- oder epoxidterminiertes Acrylnitril/ Butadien-Copolymer oder ein Derivat davon ist. Derartige Flüssigkautschuke sind beispielsweise unter dem Namen Hypro® (früher Hycar®) CTBN und CTBNX und ETBN von Emerald Performance Materials LLC kommerziell erhältlich. Als Derivate sind insbesondere Epoxidgruppen aufweisende Elastomer-modifizierte Präpolymere, wie sie unter der Produktlinie Polydis®, vorzugsweise aus der Produktlinie Polydis® 36.., von der Firma Struktol® (Schill + Seilacher Gruppe, Deutschland) oder unter der Produktlinie Albipox® (Evonik Hanse GmbH, Deutschland) kommerziell vertrieben werden, geeignet. In einer weiteren Ausführungsform ist der Schlagzähigkeitsmodifikator (SM) ein Polyacrylatflüssigkautschuk (SM1), der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von Carboxyl- oder Epoxid-terminierten Acrylnitril/Butadien-Copolymeren oder Derivaten davon mit Epoxid-terminierten Polyurethanpräpolymeren.

In einer weiteren Ausführungsform kann der zusätzliche Schlagzähigkeitsmodifikator (SM) ein fester Schlagzähigkeitsmodifikator sein, welcher ein organisches ionenausgetauschtes Schichtmineral ist. Das ionengetauschte Schichtmineral kann entweder ein kationengetauschtes oder ein anionengetauschtes Schichtmineral sein. Es ist auch möglich, dass die Zusammensetzung gleichzeitig ein kationengetauschtes Schichtmineral und ein anionengetauschtes Schichtmineral enthält.

Das kationengetauschte Schichtmineral wird hierbei erhalten aus einem Schichtmineral, bei welchem zumindest ein Teil der Kationen durch organische Kationen ausgetauscht worden sind. Beispiele für derartige kationengetauschte Schichtmineralien sind insbesondere diejenigen, welche in US 5707439 oder in US 6197849 erwähnt sind. Dort ist auch das Verfahren zur Herstellung dieser kationengetauschten Schichtminerale beschrieben. Bevorzugt als Schichtmineral ist ein Schichtsilikat. Insbesondere bevorzugt handelt es sich beim Schichtmineral um ein Phyllosilikat, wie sie in US 6197849, Spalte 2, Zeile 38, bis Spalte 3, Zeile 5, beschrieben sind, insbesondere um einen Bentonit. Als besonders geeignet haben sich Schichtmineral wie Kaolinit oder ein Montmorillionit oder ein Hectorit oder ein Illit erwiesen.

Zumindest ein Teil der Kationen des Schichtminerals wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidiniumkationen oder Amidiniumkationen;oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azo-bicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6197849 in Spalte 3, Zeile 6, bis Spalte 4, Zeile 67, offenbart werden.

Bevorzugte kationengetauschte Schichtminerale sind dem Fachmann unter der Bezeichnung Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Das anionengetauschte Schichtmineral wird erhalten aus einem Schichtmineral, bei welchem zumindest ein Teil der Anionen durch organische Anionen ausgetauscht worden sind. Ein Beispiel für ein anionengetauschtes Schichtmineral ist ein Hydrotalcit, bei dem zumindest ein Teil der Carbonat-Anionen der Zwischenschichten durch organische Anionen ausgetauscht wurden.

In einer weiteren Ausführungsform ist der zusätzliche Schlagzähigkeitsmodifikator (SM) ein fester Schlagzähigkeitsmodifikator, welcher ein Blockcopolymer (SM2) ist. Das Blockcopolymer (SM2) wird erhalten aus einer anionischen oder kontrollierten radikalischen Polymerisation von Methacrylsäureester mit mindestens einem weiteren eine olefinisch Doppelbindung aufweisenden Monomer. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA)-Copolymere, erhältlich z.B. unter dem Namen GELOY® 1020 von GE Plastics. Besonders bevorzugte Blockcopolymere (SM2) sind Blockcopolymere aus Methacrylsäuremethylester, Styrol und Butadien. Derartige Blockcopolymere sind beispielsweise als Triblockcopolymere unter der Gruppenbezeichnung SBM von Arkema erhältlich.

In einer weiteren Ausführungsform ist der zusätzliche Schlagzähigkeitsmodifikator (SM) ein Core-Shell-Polymer (SM3). Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell-Struktur bildet sich entweder spontan durch Entmischen eines Blockcopolymers oder ist durch die Polymerisationsführung als Latex oder Suspensions-polymerisation mit nachfolgender Pfropfung vorgegeben. Bevorzugte Core-Shell-Polymere sind sogenannte MBS-Polymere, welche kommerziell unter dem Handelsnamen Clearstrength® von Arkema, Paraloid® von Dow (früher Rohm und Haas) oder F-351® von Zeon erhältlich sind.

Besonders bevorzugt sind Core-Shell Polymerpartikel, die bereits als getrockneter Polymerlatex vorliegen. Beispiele hierfür sind GENIOPERL® M23A von Wacker mit Polysiloxankern und Acrylatschale, strahlungsvernetzte Kautschukpartikel der NEP Reihe, hergestellt von Eliokem, oder Nanoprene® von Lanxess oder Paraloid® EXL von Dow. Weitere vergleichbare Beispiele für Core-Shell-Polymere werden unter dem Namen Albidur® von Evonik Hanse GmbH, Deutschland, angeboten. Ebenso geeignet sind nanoskalige Silikate in Epoxid-Matrix, wie sie unter dem Handelnamen Nonopox von Evonik Hanse GmbH, Deutschland, angeboten werden.

In einer weiteren Ausführungsform ist der zusätzliche Schlagzähigkeitsmodifikator (SM) ein Umsetzungsprodukt (SM4) eines carboxylierten festen Nitrilkautschuks mit überschüssigem Epoxidharz.

Es hat sich gezeigt, dass in der Zusammensetzung vorteilhaft ein oder mehrere zusätzliche Schlagzähigkeitsmodifikatoren (SM) vorhanden sind. Als besonders vorteilhaft hat sich gezeigt, dass ein derartiger weiterer Schlagzähigkeitsmodifikator (SM) ein Epoxidgruppenden aufweisender Schlagzähigkeitsmodifikator der Formel (VIII) ist.

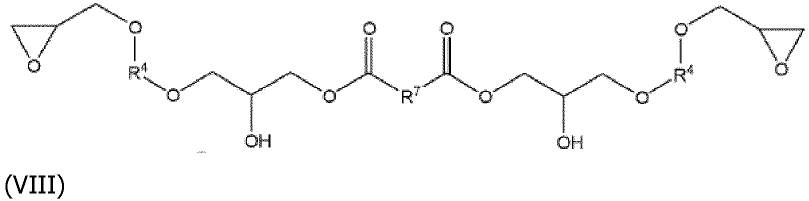

Hierin ist R⁷ ein zweiwertiger Rest eines Carboxylgruppen-terminierten Butadien/ Acrylnitril-Copolymers (CTBN) nach Entfernung der terminalen Carboxylgruppen. Der Rest R⁴ ist wie vorstehend für Formel (VII) definiert und beschrieben. Insbesondere steht R⁷ für einen Rest, der durch formelle Entfernung der Carboxyl-Gruppen eines unter dem Namen Hypro® CTBN von Noveon kommerziell vertriebenen Carboxylgruppen-terminierten Butadien/Acrylonitril-Copolymers CTBN, erhalten wird. R⁷ ist bevorzugt ein zweiwertiger Rest der Formel (VIII').

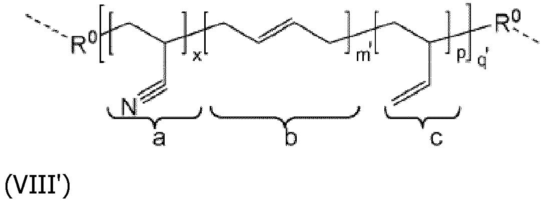

R⁰ steht hierbei für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnenden Ausführungsform stellt der Substituent R⁰ einen Rest der Formel (VIII-a) dar.

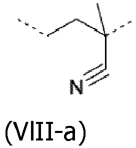

Weiterhin steht der Index q' für einen Wert zwischen 40 und 100, insbesondere zwischen 50 und 90. Die Bezeichnungen b und c stehen für die Strukturelemente, welche von Butadien stammen und a für das Strukturelement, welches von Acrylnitril stammt. Die Indices x, m', und p' stellen ihrerseits Werte dar, die das Verhältnis der Strukturelement a, b und c zueinander beschreiben. Der Index x steht für Werte von 0,05 bis 0,3, der Index m' für Werte von 0,5 - 0,8, der Index p für Werte von 0,1 - 0,2 mit der Maßgabe, dass die Summe von x, m' und p gleich 1 ist.

Dem Fachmann ist verständlich, dass die in Formel (VIII') gezeigte Struktur als vereinfachte Darstellung zu verstehen sind. Somit können die Bausteine a, b und c jeweils zufällig, abwechselnd oder blockweise zueinander angeordnet sein. Insbesondere stellt somit Formel (VIII') nicht zwangsläufig ein Triblock-Copolymer dar.

Die Herstellung des Schlagzähigkeitsmodifikator der Formel (VIII) erfolgt durch die Umsetzung eines Carboxylgruppen-terminierten Butadien/Acrylonitril-Copolymers (CTBN), insbesondere der Formel (IX), wobei die Substituenten wie in Formel (VIII) definiert sind, mit einem vorstehend erläuterten Diglycidylether der Formel (VII) in einem stöchiometrischen Überschuss des Diglycidylethers, d.h. dass das Verhältnis der Glycidylether-Gruppen zu den COOH-Gruppen ist größer gleich 2.

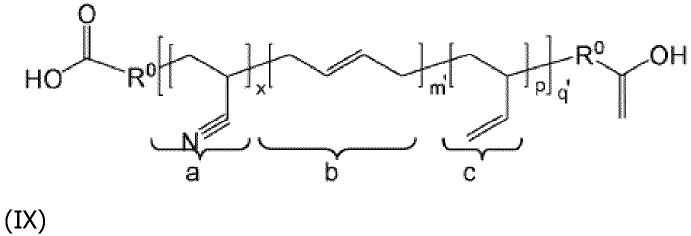

Der Anteil des oder der vorstehend beschriebenen zusätzlichen Schlagzähigkeitsmodifikatoren (SM), der/die von dem Epoxid-terminierten Schlagzähigkeitsmodifikator im erfindungsgemäßen Flüssigkautschuk verschieden ist, beträgt z.B. 0 bis 45 Gew.-%, vorzugsweise 1 bis 45 Gew.-%, insbesondere 3 bis 35 Gew.-%, bezogen auf das Gewicht der gesamten Zusammensetzung.

Die Zusammensetzung kann selbstverständlich noch andere Bestandteile umfassen. Insbesondere sind dies Füllstoff (F), Reaktivverdünner (G), wie Epoxidgruppentragende Reaktivverdünner, Katalysatoren, Stabilisatoren, insbesondere Hitze- und/ oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler. Für diese Additive können alle in der Technik bekannten in den üblichen Mengen eingesetzt werden.

Bei den Füllstoffen (F) handelt es sich z.B. bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff (F) sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs (F) 3 bis 50 Gewichts-%, vorzugsweise 5 bis 35 Gewichts-%, insbesondere 5 bis 25 Gewichts-%, bezogen auf das Gewicht der gesamten Zusammensetzung.

Bei den Reaktivverdünnern (G) handelt es sich insbesondere um:
- Glycidylether von monofunktionellen gesättigten oder ungesättigten, verzweigten oder unverzweigten, zyklischen oder offenkettigen C₄-C₃₀-Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂-C₃₀-Alkoholen, insbesondere ausgewählt aus der Gruppe bestehend aus Ethylenglykol-, Butandiol-, Hexandiol-, Octandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen, insbesondere ausgewählt aus der Gruppe bestehend aus Phenylglycidylether, Kresylglycidylether, p-tert.-Butyl-phenylglycidylether, Nonylphenolglycidylether, 3-n-Pentadecenylglycidylether (aus Cashewnuss-Schalen-Öl), N, N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäureglycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycoldiglycidylether oder Polypropyleneglycol-diglycidylether.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des Reaktivverdünners (G) 0,1 bis 20 Gewichts-%, vorzugsweise 1 bis 8 Gewichts-%, bezogen auf das Gewicht der gesamten Zusammensetzung.

Als Weichmacher eignen sich z.B. Phenolalkylsulfonsäureester oder Benzolsulfonsäure-N-butylamid, die als Mesamoll® bzw. Dellatol BBS von Bayer erhältlich sind. Als Stabilisatoren eignen sich z.B. gegebenenfalls substituierte Phenole, wie Butylhydroxytoluol (BHT) oder Wingstay® T (Elikem), sterisch gehinderte Amine oder N-Oxylverbindungen wie TEMPO (Evonik).

In einer besonderen Ausführungsform enthält die Zusammensetzung ferner mindestens ein physikalisches oder chemisches Treibmittel, insbesondere in einer Menge von 0,1 bis 3 Gewichts-%, bezogen auf das Gewicht der Zusammensetzung. Bevorzugte Treibmittel sind chemische Treibmittel, welche beim Erhitzen, insbesondere auf eine Temperatur von 100 bis 200 °C, ein Gas freisetzen. Es kann sich um exotherme Treibmittel handeln, wie z.B. Azoverbindungungen, Hydrazinderivate, Semicarbazide oder Tetrazole. Bevorzugt sind Azodicarbonamid und Oxy-bis(benzol-sulfonylhydrazid), die bei der Zersetzung Energie freisetzen. Weiterhin geeignet sind auch endotherme Treibmittel, wie beispielsweise Natriumbicarbonat/Citronensäure-Mischungen. Derartige chemische Treibmittel sind beispielsweise unter dem Namen Celogen® der Firma Chemtura erhältlich. Ebenfalls geeignet sind physikalische Treibmittel, die unter dem Handelsnamen Expancel® der Firma Akzo Nobel vertrieben werden. Expancel® und Celogen® sind besonders bevorzugt.

Beispielhaft seien noch bevorzugte Zusammensetzungen und Anteile davon für 1K und 2K Epoxidharz-Klebstoffe mit dem erfindungsgemäßen Flüssigkautschuk, der den Epoxidgruppen-terminierten Schlagzähmodifikator enthält, aufgeführt. Die Prozentangaben beziehen sich auf das Gewicht.

### 1K Klebstoffe:

A) 0 - 60% Basis-Epoxidharze (Flüssigharz, Festharz, epoxidierte Novolake usw.)
B) 20 - 80%, bevorzugt 30-60% des erfindungsgemäßen Epoxid-terminierten PU-Polymers in Mischung mit Flüssigharzen (BADGE etc.)
C) 0 - 40%, bevorzugt 10-25% blockiertes PU-Polymer
D) 0 - 30%, bevorzugt 5-20% CTBN-Derivat (Hycar-Addukte z.B. mit BADGE)
E) 0 - 15%, bevorzugt 2.5-7.5% Reaktivverdünner (z.B. Hexandioldiglycidylether)
F) 0 - 25% weitere unreaktive Flexibilisatoren Kautschuk-Partikel (SM2), nanoskalige Core-Shell- (SM3) oder auch HAT-Paste (Addukt MDI und Monobutylamin, vgl. EP 1152019)
G) 2 - 10%, bevorzugt 3-4.5% Härter und Katalysatoren
H) 10- 40%, bevorzugt 15-25% organische oder mineralische Füllstoffe
I) Additive und Hilfsstoffe (z.B. Fließmittel, Pigmente, Haftvermittler)

### 2K Klebstoffe:

### A-Komponente:

A) 5 - 80%, bevorzugt 30-60% des misch-/teilblockierten Polymers in Mischung mit Flüssigharzen (BADGE etc.)
B) 0 - 50% Flüssigharz (BADGE etc.)
C) 0 - 20% Festharz
D) 0- 10% Reaktivverdünner (z.B. Hexandioldiglycidylether)
E) 0 - 25% CTBN-Derivat (z.B. mit BADGE)
F) 0 - 25% weitere unreaktive Flexibilisatoren Kautschuk-Partikel (SM2), nanoskalige Core-Shell- (SM3) oder auch HAT-Paste (Addukt MDI und Monobutylamin, EP 1152019)
G) 0 - 50% organische oder mineralische Füllstoffe
H) Additive und Hilfsstoffe (z.B. Fließmittel, Pigmente, Haftvermittler)

### B-Komponente:

A) 0 - 60% Aliphatische, cycloaliphatische Polyamine (und/oder Epoxy-Addukte davon)
B) 0-60% Polyoxyalkylenamine
C) 0 - 60% Polyamide/Imidazoline (und/oder Epoxy-Addukte davon)
D) 0 - 60% Amidoamine (und/oder Epoxy-Addukte davon)
E) 0 - 60% Polyoxyalkylen Polyamide (und/oder Epoxy-Addukte davon)
F) 0 - 60% Mannich Basen oder Phenalkamine (und/oder Epoxy-Addukte davon)
G) 0 - 10% Tertiäre Amine
H) 0 - 50% organische oder mineralische Füllstoffe
I) Additive und Hilfsstoffe (z.B. Fließmittel, Pigmente, Haftvermittler)

Bevorzugte Polyamine für den Härter (B-Komponente) sind Polyetheramine wie 4,7,10-Trioxa-1,13-tridecanediamin, 4,9-Dioxadodecan-1,12-diamine, Addukte wie 4,7,10-Trioxa-1,13-tridecandiamin, 4,9-Dioxadodecan-1,12-diamin, und Polyoxyalkylenamine (z. B. Jeffamin® D400). Phenalkamine wie Aradur® 3460, rein aliphatische Amine, oder gemischt aliphatische Polyetherstrukturen wie im Jeffamin RFD270.

Bei der zweikomponentigen Epoxidharzzusammensetzung erfolgt nach dem Mischen der ersten Komponente (K1) und der zweiten Komponente (K2) eine Reaktion, welches zum Aushärten der Zusammensetzung führt. In einer weiteren Ausführungsform, nämlich der einkomponentigen hitzehärtenden Epoxidharzzusammensetzung, erfolgt die Aushärtung durch Erhitzen der Zusammensetzung auf eine Temperatur, welche über der Hitzeaktivierung des thermisch aktivierbaren Härters liegt. Diese Aushärtetemperatur ist vorzugsweise eine Temperatur im Bereich von 100 °C bis 220 °C, vorzugsweise 120 bis 200 °C.

Die Zusammensetzung eignet sich bestens als Klebstoff und wird bevorzugt zum Verkleben von mindestens zwei Substraten verwendet. Die Klebstoffe eignen sich insbesondere für Automobile oder An- oder Einbaumodule für Fahrzeuge. Ferner eignen sich die erfindungsgemäßen Zusammensetzungen auch für andere Anwendungsgebiete. Besonders zu erwähnen sind verwandte Anwendungen im Transportmittelbau wie Schiffe, Lastwagen, Busse oder Schienenfahrzeuge, im Bau von Gebrauchsgütern wie beispielsweise Waschmaschinen, aber auch im Bausektor, beispielsweise als versteifende Strukturklebstoffe. Es können mit einer erfindungsgemäßen Zusammensetzung neben Klebstoffen auch Dichtmassen oder Beschichtungen realisiert werden.

Bei den zu verklebenden oder beschichtenden Materialien handelt es sich bevorzugt um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

### Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

**Tabelle 1**

| Verwendete Rohstoffe | Beschreibung | Lieferant |
|---|---|---|
| PolyTHF® 2000 | Polyol, (difunktionelles Polybutylenglykol mit einer Molmasse von 2000 g/mol) | BASF |
| Poly BD® R45V | Polyol, hydroxyl terminiertes Polybutadien mit einer Molmasse von 2800 g/mol | Cray Valley |
| Ionol® CP(=BHT) | Stabilisator | Evonik |
| Isophorondiisocyanat (=IPDI) | Isocyanat | Evonik |
| Epikote® 828LVEL | Standard Bisphenol-A-Epoxidharz | Hexion |
| D.E.R. ® 331 | Standard Bisphenol-A-Epoxidharz | Dow |
| Dibutylzinndilaurat (DBTL) | Katalysator | Thorson |
| 4-Methylphthalsäureanhydrid 95% | Glykolfänger | Sigma-Aldrich, Art Nr. 348317 |

### Herstellungsbeispiel 1: NCO-terminiertes Präpolymer 1

700,00 g PolyTHF 2000 (OH-Zahl 57,0 mg/g KOH), 700,00 g Poly BD R45V (OH-Zahl 43,7 mg/g KOH) und 7,00 g BHT als Stabilisator wurden 1 Stunde unter Vakuum bei 90 °C getrocknet. Anschließend wurden 280,54 g IPDI und 0,215 g Dibutylzinndilaurat (DBTL) zugegeben. Die Reaktion wurde 2 h unter Vakuum bei 90 °C durchgeführt: Gemessener freier NCO-Gehalt: 3,031% (theoretischer NCO-Gehalt: 3,090%).

### Herstellungsbeispiel 2: NCO-terminiertes Präpolymer 2

350,00 g PolyTHF 2000 (OH-Zahl 55,9 mg/g KOH), 350,00 g Poly BD R45V (OH-Zahl 46 mg/g KOH) und 3,5 g BHT als Stabilisator wurden 1 Stunde unter Vakuum bei 90 °C getrocknet. Anschließend wurden 111,15 g IPDI und 0,108 g DBTL zugegeben. Die Reaktion wurde 2 h unter Vakuum bei 90 °C durchgeführt: Gemessener freier NCO-Gehalt: 3,237% (theoretischer NCO-Gehalt: 3,119%).

### Beispiel 1

Epikote® 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote® 828LVEL zugegeben. Anschließend wurden 1,071 g 4-Methylphthalsäureanhydrid (0,25 Gew.-% bezogen auf Epoxidharz) zugesetzt und dann wurde kurz gemischt. Die Mischung wurde mit 0,110 g DBTL versetzt und es wurde 2 Stunden im Vakuum bei 110°C umgesetzt.

### Beispiel 2

Epikote® 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote® 828LVEL zugegeben. Anschließend wurden 2,142 g 4-Methylphthalsäureanhydrid (0,5 Gew.-% bezogen auf Epoxidharz) zugesetzt und dann wurde kurz gemischt. Die Mischung wurde mit 0,110 g DBTL versetzt und es wurde 2 Stunden im Vakuum bei 110°C umgesetzt.

### Beispiel 3

Epikote® 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote® 828LVEL zugegeben. Anschließend wurden 3,214 g 4-Methylphthalsäureanhydrid (0,75 Gew.-% bezogen auf Epoxidharz) zugesetzt und dann wurde kurz gemischt. Die Mischung wurde mit 0,110 g DBTL versetzt und es wurde 2 Stunden im Vakuum bei 110°C umgesetzt.

### Beispiel 4

Epikote® 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote® 828LVEL zugegeben. Anschließend wurden 6,428 g 4-Methylphthalsäureanhydrid (1,5 Gew.-% bezogen auf Epoxidharz) zugesetzt und dann wurde kurz gemischt. Die Mischung wurde mit 0,111 g DBTL versetzt und es wurde 2 Stunden im Vakuum bei 110°C umgesetzt.

### Beispiel 5

Epikote® 828LVEL wurde 2 Stunden bei 90 °C unter Vakuum getrocknet. 120 g des in Herstellungsbeispiel 2 hergestellten NCO-terminierten Präpolymers 2 wurden in einem Gefäß vorgelegt. Hierzu wurden 513,565 g des getrockneten Epikote® 828LVEL zugegeben. Anschließend wurden 15,407 g 4-Methylphthalsäureanhydrid (3,0 Gew.-% bezogen auf Epoxidharz) zugesetzt und dann wurde kurz gemischt. Die Mischung wurde mit 0,130 g DBTL versetzt und es wurde 3 Stunden im Vakuum bei 110°C umgesetzt.

### Beispiel 6

Epikote® 828LVEL wurde 2 Stunden bei 90 °C unter Vakuum getrocknet. 120 g des in Herstellungsbeispiel 2 hergestellten NCO-terminierten Präpolymers 2 wurden in einem Gefäß vorgelegt. Hierzu wurden 513,565 g des getrockneten Epikote® 828LVEL zugegeben. Anschließend wurden 26,678 g 4-Methylphthalsäureanhydrid (5,0 Gew.-% bezogen auf Epoxidharz) zugesetzt und dann wurde kurz gemischt. Die Mischung wurde mit 0,132 g DBTL versetzt und es wurde 3 Stunden im Vakuum bei 110°C umgesetzt.

### Vergleichsbeispiel 1

Epikote® 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote® 828LVEL zugegeben. Es wurde kurz gemischt und die Mischung wurde mit 0,110 g DBTL versetzt und es wurde 2 Stunden im Vakuum bei 110°C umgesetzt.

In Tabelle 2 sind die Ergebnisse für die Beispiele 1 bis 6 und Vergleichsbeispiel 1 zusammengestellt. Wie ersichtlich, war das Produkt ohne Zugabe von Anhydrid nicht ungeliert herstellbar. Deutlich erkennbar ist auch die deutliche Verringerung der Viskosität in den Reaktionsmischungen, denen Anhydrid zugesetzt wurde. Das Anhydrid gewährleistet somit eine prozesssichere Herstellung. Im Bereich von 0,5 bis 1,5 % Anhydrid wurde ein selbst nach gewisser Lagerzeit flüssig verarbeitbarer Toughener erhalten. Bei höheren Mengen Anhydrid bildet das Produkt infolge langsamer Abreaktion eine Haut durch Vernetzungsrektionen des Isocyanats mit der Luftfeuchtigkeit aus. Zwar liegt Prozesssicherheit vor, die Langzeitlagerstabilität ist aber eingeschränkt.

**Tabelle 2**

| | Zugabe MPA (Gew.-%) | NCO (3h) | NCO (1d) | Viskosität (1d) 25/50°C [Pa*s] | EEW [g/mol] (1d) | Aussehen (1d) | Aussehen (7d, 60°C) |
|---|---|---|---|---|---|---|---|
| Vgl.Bsp. 1 | - | geliert | geliert | 268/56 | 233,97 | geliert | geliert |
| Bsp. 1 | 0,25 | 0,17 | 0,15 | 139/25 | 248,14 | geliert | geliert |
| Bsp. 2 | 0,50 | 0,31 | 0,27 | 54/6 | 254,45 | flüssig | Haut |
| Bsp. 3 | 0,75 | 0,35 | 0,29 | 51/5 | 242,72 | flüssig | Haut |
| Bsp. 4 | 1,50 | 0,42 | 0,31 | 51/5 | 236,41 | flüssig | Haut |
| Bsp. 5 | 3,00 | 1,02 | 0,48 | 71/13 | nicht homogen | dicke Haut | dicke Haut |
| Bsp. 6 | 5,00% | 0,78 | 0,25 | 287/50 | nicht homogen | dicke Haut | dicke Haut |

### Beispiele 7 bis 10 und Vergleichsbeispiel 2

In den Beispielen 7 bis 10 und Vergleichsbeispiel 2 wurden ähnlich wie in den Beispielen 1 bis 6 und Vergleichsbeispiel 1 ein Isocyanat-terminiertes Präpolymer mit einer Epoxidverbindung in Anwesenheit von MPA blockiert, wobei D.E.R.® 331 anstelle von Epikote® 828LVEL als Epoxidverbindung eingesetzt wurde. In Tabelle 3 sind die Ergebnisse für die Beispiele 7 bis 10 und Vergleichsbeispiel 2 zusammengestellt.

**Tabelle 3**

| | Zugabe MPA (Ge w.-%) | NCO (3h) | NCO (1d) | Viskosität (1d) 25/50°C [Pa*s] | EEW [g/mol] (1d) | Aussehen (1d) | Aussehen (7d, 60°C) |
|---|---|---|---|---|---|---|---|
| Vgl.Bsp. 2 | - | geliert | geliert | 440/85 | 273,15 | geliert | geliert |
| Bsp. 7 | 0,25 % | 0,12% | 0,08% | 151/27 | 272,48 | geliert | geliert |
| Bsp. 8 | 0,50 % | 0,29% | 0,23% | 137/16 | 280,90 | flüssig | geliert |
| Bsp. 9 | 0,75 % | 0,26% | 0,21% | 137/16 | 262,47 | flüssig | Hautbildung |
| Bsp. 10 | 1,50 % | 0,31% | 0,30% | 99/12 | 291,55 | flüssig | dicke Haut - geliert |

### Beispiele 11 bis 16

150 g Isocyanat-terminiertes Präpolymer, hergestellt aus 60 Gew.-% PolyTHF, 40 Gew.-% Poly bd R45V, IPDI (0,75 Äquivalente) und DBTL, wurde mit 1 Äquivalent getrocknetem Epikote 828LVEL versetzt. Hierzu wurden 8,11 mmmol Anhydrid gegeben, der Ansatz wurde gemischt und dann unter Zugabe von Katalysator unter Vakuum bei 110 °C umgesetzt. Als aromatische Anhydride wurden Methylphthalsäureanyhdrid (Beispiel 11) und Phthalsäureanhydrid (Beispiel 12), als cycloaliphatische Anhydride Methylhexahydrophthalsäureanhydrid (Beispiel 13), Methylnorbornen-2,3-dicarbonsäureanhydrid (Beispiel 14), als Bernsteinsäurederivat mit aliphatischem Substituenten Dodecenylsuccinanhydrid (Beispiel 15) und als difunktionelles Anhydrid Pyromellitsäureanhydrid (Beispiel 16) gewählt. Die Ergebnisse sind in Tabelle 4 aufgeführt.

Mit allen gewählten Anhydriden konnte eine prozesssichere Herstellung des mit Epoxidharz blockierten Schlagzähmodifikators gewährleistet werden. In keinem Fall kam es während der Herstellung des Schlagzähmodifikators zur Gelierung.

### Visuelle Abschätzung des Gelierungsgrades

Die Abrisstendenz einer Materialprobe des jeweiligen Ansatzes wurde dazu benutzt, den Gelierungsgrad der einzelnen Ansätze visuell abzuschätzen. Hierzu wurde ein Holzspatel in den Ansatz getaucht und von Hand mit mittlerer Geschwindigkeit herausgezogen, bis es zum Abriss des gebildeten gummiartigen Fadens kam. Vollständig durchgelierte Proben waren härter und zeigten einen schnelleren Fadenabriss als elastische, unvollständiger durchgelierte Ansätze.

### Bestimmung des Isocyanatgehaltes:

Der Isocyanatgehalt wurde in Gew. % mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs T70 mit automatischer potentiometrischer Endpunktbestimmung durchgeführt. Dazu wurden jeweils

**Tabelle 3**

| Beispiel | 11 | 12 | 13 | 14 | 15 | 16 |
|---|---|---|---|---|---|---|
| Eingesetztes Anhydrid | MethylphthalsäureAnhydrid | Phthalsäureanhydrid | Methylhexahydrophthalsäureanhydrid | Methylnorbornen-2,3-dicarbonsäureayhdrid | Dodecenylsuccinsäureanhydrid | Pyromellitsäureanhydrid |
| Struktur Anhydrid | 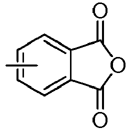 | 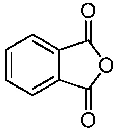 | 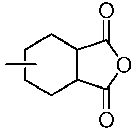 | 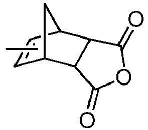 | 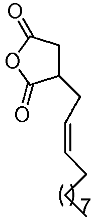 | 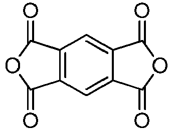 |
| NCO (2h) | 0,45% | 0,49% | 0,45% | 0,57% | 0,49 | 0,67% |
| NCO (3h) | 0,30% | 0,34% | 0,26% | 0,42% | 0,31% | 0,55% |
| NCO (1d) | 0,16% | 0,20% | 0,14% | 0,17% | 0,15% | 0,32% |
| Viskosität 1d 25/50 [Pa*s] | 1400/354 | 857/227 | 1380/383 | 1450/379 | 1370/396 | 841/247 |
| Gelierungstendenz 1w 60°C | geliert, weicher Gummi, langsamer Abriss | geliert, weicher Gummi, schneller Abriss | geliert, weicher Gummi, schneller Abriss | geliert, weicher Gummi, langsamer Abriss | geliert, weicher Gummi, langsamer Abriss | geliert, harter Gummi |

600-800 mg der zu bestimmenden Probe unter Erwärmen in einer Mischung aus 10 ml Isopropanol und 40 ml Xylol gelöst und anschließend mit einer Lösung von Dibutylamin in Xylol umgesetzt. Überschüssiges Di-n-butylamin wurde mit 0,1M Salzsäure titriert und daraus der Isocyanatgehalt berechnet.

### Bestimmung der Viskosität:

Viskositätsmessungen erfolgten auf einem Rheometer vom Typ MCR 101 des Herstellers Anton Paar rotatorisch unter Verwendung einer Platten-Platten Geometrie mit folgenden Parametern: 50 s-1 Rotation, 0,2 mm Spalt, Platte-Platte-Abstand 25 mm.

### Beispielhafte Herstellung eines 2K-Klebstoffes auf Basis eines reaktiven Flüssigkautschukes

Folgendes Beispiel soll die Verwendung eines reaktiven Flüssigkautschukes als Schlagzähmodifikator weiter veranschaulichen, den Umfang der Erfindung aber in keiner Weise beschränken. Die dazu verwendeten Rohstoffe sind in Tabelle 4 angegeben.

**Tabelle 4**

| | |
|---|---|
| Verwendete Rohstoffe | Lieferant |
| D.E.R.® 331 | Dow |
| Araldite® DY 91158 | Huntsman |
| Omyacarb® 5GU | Omya |
| Aerosil® R202 | Evonik |
| Epoxidharz Farbpaste blau | Lehmann |
| Ancamine® 1922A | Air Products |
| Ancamine® K54 | Air Products |

Zur Herstellung der A-Komponente wurden 163.2 g des reaktiven Flüssigkautschukes aus Beispiel 9 mit 109,8g des Epoxidharzes D.E.R.® 331, 6,0g des Haftvermittlers Araldite® DY91158, 0,6g Epoxidharz Farbpaste Blau, 9,0g Omyacarb® 5GU und 12g Aerosil® R202 in einem Planetarmischer bei 60 °C unter Vakuum zu einer homogen Paste gerührt. Die flüssige B-Komponente wurde bei Raumtemperatur durch Mischen von 285 g Ancamine® 1922A und 15g Ancamine® K 54 in einem Planetarmischer hergestellt.

Aus beiden Komponenten wurden 40,0g des fertigen Klebstoffes durch zweiminütiges Mischen von 32,37g der A-Komponente und 7,67g der B-Komponente in einem Speedmixer® der Firma Hauschild des Typs 600DAV FVZ bei 2350 U/min erhalten. Das Mischungsverhältnis von 4,22 (A-Komponente) zu 1 (B-Komponente) ergab sich hierbei wie in Tabelle 5 durch das gewählte 1:1 Äquivalent von NH-Äquivalentmasse zur Epoxidäquivalentmasse.

**Tabelle 5**

| A-Komponente | Anteil [%] |
|---|---|
| D,E,R,® 331 | 36,59 |
| Flüssigkautschuk Beispiel 9 | 54,41 |
| Araldite® DY 91158 | 2,00 |
| Omyacarb® 5GU | 3,00 |
| Aerosil® R202 | 4,00 |
| Farbpaste Blau | 0,20 |
| Epoxidäquivalentmasse | 245,30 |

| B-Komponente | Anteil [%] |
|---|---|
| Ancamine® 1922A | 95,00 |
| Ancamine® K54 | 5,00 |
| NH-Äquivalentmasse | 58,20 |

Unmittelbar nach Mischen der Klebstoffformulierung wurde wie in den nachfolgenden Prüfmethoden beschrieben der Prüfkörper zur Ermittlung der Zugfestigkeit, der Zugscherfestigkeit sowie der Schlagschälarbeit hergestellt. Nach Aushärten der Probekörper nach den drei Härtungsregimen 4h Raumtemperatur+ 30 min 60°C, 1d Raumtemperatur, 7d Raumtemperatur wurden dabei die in Tabelle 6 angegebenen Werte ermittelt.

**Tabelle 6**

| Aushärtung | | |
|---|---|---|
| 4h RT+ 30 min 60°C | ZF [MPa] | 26,34 |
| | BE¹ RT [MPa] | 14,63 |
| 1d RT | ZSF [MPa] | 25,41 |
| | BE¹ RT [J] | 14,46 |
| 7d RT | ZF [MPa] | 22,1 |
| | ZSF [MPa] | 27,88 |
| | BE¹ RT [J] | 14,15 |
| | BE¹ °C [J] | 14,51 |
| | BE¹ -30°C [J] | 4,14 |

### Zugscherfestigkeit (ZSF) (DIN EN 1465)

Probenkörper wurden aus der beschrieben Beispiel-Klebstoffzusammensetzung und mit elektrolytisch verzinktem H380 Stahl (EloZn) mit dem Mass 100 x 25 x 0,8 mm hergestellt. Dabei betrug die Klebfläche 25 x 10mm bei einer Schichtdicke von 0,3mm. Die Zuggeschwindigkeit betrug 10mm/min.

### Schlagschälarbeit (ISO 11343)

Die Probenkörper wurden aus der beschriebenen Beispiel-Klebstoffzusammensetzung und mit elektrolytisch verzinktem DC04 Stahl (EloZn) mit dem Mass 90 x 20 x 0,8mm hergestellt, dabei betrug die Klebfläche 20 x 30mm bei einer Schichtdicke von 0,3mm.. Die Messung der Schlagschälarbeit erfolgte jeweils bei den angegebenen Temperaturen als Dreifachbestimmung. Die Schlaggeschwindigkeit betrug 2 m/s. Als Bruchenergie (*BE*) in Joule wird die Fläche unter der Messkurve (von 25% bis 90%, gemäss IS011343) angegeben.

### Zugfestigkeit (ZF) (DIN EN ISO 527)

Eine Klebstoffprobe wurde zwischen zwei Teflonpapieren auf eine Schichtdicke von 2mm verpresst. Nach Aushärtung wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit wurde gemäss DIN EN ISO 527 bestimmt.

## Patentansprüche

1. Verfahren zur Herstellung eines einen Epoxidgruppen-terminierten Schlagzähigkeitsmodifikator enthaltenden Flüssigkautschuks, umfassend die Umsetzung von einem Isocyanat-terminierten Präpolymer der Formel (II) 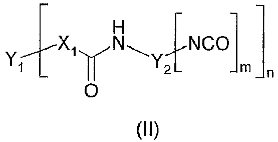
worin X₁ = O, S oder NH ist;
Y₁ für einen n-wertigen Rest eines reaktiven Polymers nach dem Entfernen endständiger Amino-, Thiol- oder Hydroxylgruppen steht;
Y₂ für einen divalenten Rest von aliphatischen, cycloaliphatischen, aromatischen oder araliphatischen Diisocyanaten nach Entfernen der Isocyanatgruppen steht, oder für einen trivalenten Rest von Trimeren oder Biureten von aliphatischen, cycloaliphatischen, aromatischen oder araliphatischen Diisocyanaten nach Entfernen der Isocyanatgruppen steht;
m = 1 oder 2 ist; und
n = 2, 3 oder 4; bevorzugt 2 oder 3, ist,
mit mindestens einem Epoxidharz, umfassend eine eine primäre oder sekundäre Hydroxygruppe enthaltende Epoxidverbindung der Formel (III) 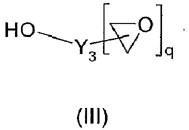
worin Y₃ für einen Rest eines eine primäre oder sekundäre Hydroxylgruppe enthaltenden aliphatischen, cycloaliphatischen, aromatischen oder araliphatischen Epoxids nach dem Entfernen der Epoxidgruppen und der primären oder sekundären Hydroxylgruppe steht; und
q = 1, 2 oder 3 ist;
in Anwesenheit mindestens einer Verbindung ausgewählt aus Anhydriden, Ketonen und Aldehyden als Glycolfänger, wobei das Isocyanat-terminierte Präpolymer der Formel (II), das Epoxidharz und der Glycolfänger miteinander gemischt werden oder das Epoxidharz mit dem Glycolfänger umgesetzt wird, bevor sie mit dem Isocyanat-terminierten Präpolymer der Formel (II) gemischt werden.

2. Verfahren nach Anspruch 1, **dadurch gekennzeichnet, dass** das Isocyanat-terminierte Präpolymer der Formel (II) erhältlich ist durch Umsetzung eines X₁H-Gruppen tragenden Präpolymers ausgewählt aus Polyetherpolyolen, Polybutadienpolyolen, Polyesterpolyolen, Polycarbonatpolyolen, NH-terminierten Polyethern und Mischungen davon mit einem oder mehreren Polyisocyanaten.

3. Verfahren nach Anspruch 1 oder Anspruch 2, **dadurch gekennzeichnet, dass** das Epoxidharz ein Umsetzungsprodukt aus mindestens einem Epoxid und mindestens einem Diol, Triol oder höherwertigen Polyol oder ein Umsetzungsprodukt aus einem Epoxidharz und mindestens einem Monophenol ist oder umfasst.

4. Verfahren nach irgendeinem der Ansprüche 1 bis 3, **dadurch gekennzeichnet, dass** das Epoxidharz ausgewählt ist aus einem ein Bisphenol A-diglycidylether-Produkt, ein Bisphenol F-diglycidylether-Produkt oder ein Bisphenol A/Fdigylcidylether-Produkt.

5. Verfahren nach irgendeinem der Ansprüche 1 bis 4, **dadurch gekennzeichnet, dass** die Epoxidverbindung der Formel (III) ausgewählt ist aus Trimethylolpropandiglycidylether, Butandioldiglycidylether, Cyclohexandimethanoldiglycidylether, Dimer von Bisphenol A-diglycidylether, Dimer von Bisphenol F-diglycidylether, Dimer von Bisphenol A/F-diglycidylether oder Mischungen davon.

6. Verfahren nach irgendeinem der Ansprüche 1 bis 5, **dadurch gekennzeichnet, dass** das Epoxidharz als Hydroxy-Epoxidverbindung der Formel (III) eine Verbindung der Formel (VI) umfasst 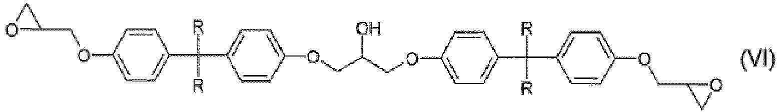 worin R unabhängig voneinander H oder Methyl ist.

7. Verfahren nach irgendeinem der Ansprüche 1 bis 6, **dadurch gekennzeichnet, dass** der Glycolfänger ein Anhydrid ist.

8. Verfahren nach irgendeinem der Ansprüche 1 bis 7, **dadurch gekennzeichnet, dass** das Anhydrid ausgewählt ist aus mindestens einem cyclischen Carbonsäureanhydrid, wobei Bernsteinsäure, Bernsteinsäurederivate, Phthalsäure und Phthalsäurederivate bevorzugt sind.

9. Verfahren nach irgendeinem der Ansprüche 1 bis 8, **dadurch gekennzeichnet, dass** die Isocyanatgruppen des Isocyanat-terminierten Präpolymers der Formel (II) durch die Umsetzung mit der Epoxidverbindung (III) teilweise oder vollständig blockiert werden.

10. Verfahren nach irgendeinem der Ansprüche 1 bis 9, **dadurch gekennzeichnet, dass** die eingesetzte Menge an Glycolfänger, bevorzugt Anhydrid, im Bereich von 0,25 bis 3,00 Gew.-%, bezogen auf die Menge an Epoxidharz, liegt.

11. Verfahren nach irgendeinem der Ansprüche 1 bis 10, **dadurch gekennzeichnet, dass** das Isocyanat-terminierte Präpolymer der Formel (II) erhältlich ist durch Umsetzung eines X₁H-Gruppen tragenden Präpolymers, eines oder mehrerer Polyisocyanate und mindestens eines Polyphenols.

12. Verfahren nach irgendeinem der Ansprüche 1 bis 10, **dadurch gekennzeichnet, dass** das Isocyanat-terminierte Präpolymer der Formel (II) erhältlich ist durch Umsetzung von mindestens zwei Polyolen mit einem oder mehreren Polyisocyanaten, wobei als Polyole mindestens ein Polyetherpolyol und mindestens ein OH-terminierter Kautschuk eingesetzt werden und das Gewichtsverhältnis von Polyetherpolyol zu OH-terminiertem Kautschuk bevorzugt im Bereich von 7:3 bis 2:8 liegt.

13. Flüssigkautschuk enthaltend einen Epoxidgruppen-terminierten Schlagzähigkeitsmodifikator, erhältlich nach einem Verfahren gemäß irgendeinem der Ansprüche 1 bis 12.

14. Verwendung eines Flüssigkautschuks nach Anspruch 13 in einer einkomponentigen oder zweikomponentigen Epoxidharzzusammensetzung, bevorzugt in einem einkomponentigen oder zweikomponentigen Epoxidharzklebstoff, zur Erhöhung der Schlagzähigkeit der gehärteten Epoxidharzmatrix.

15. 1K- oder 2K-Epoxidharzzusammensetzung, umfassend mindestens einen Flüssigkautschuk nach Anspruch 13.

16. 1K- oder 2K-Epoxidharzzusammensetzung nach Anspruch 15, umfassend
a) mindestens ein Epoxidharz (A); und
b) den Flüssigkautschuk.

17. 1K- oder 2K-Epoxidharzzusammensetzung nach Anspruch 15 oder 16, **dadurch gekennzeichnet, dass** sie ein 1K- oder 2K-Epoxidharzklebstoff ist.

## Claims

1. A method for producing a liquid rubber containing an epoxy group-terminated impact-resistance modifier, comprising the reaction of an isocyanate-terminated prepolymer of formula (II) 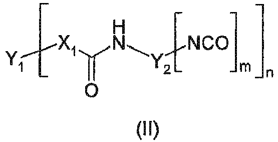
wherein X₁ = O, S or NH;
Y₁ represents an n-valent radical of a reactive polymer after removal of terminal amino, thiol or hydroxyl groups;
Y₂ represents a divalent radical of aliphatic, cycloaliphatic aromatic, or araliphatic diisocyanates after removal of the isocyanate groups, or a trivalent radical of trimers or biurets of aliphatic, cycloaliphatic, aromatic or araliphatic diisocyanates after removal of the isocyanate groups;
m = 1 or 2; and
n = 2, 3 or 4; preferably 2 or 3,
with at least one epoxy resin, comprising an epoxy compound containing a primary or secondary hydroxyl group of formula (III) 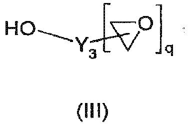
wherein Y₃ represents a radical of an aliphatic, cycloaliphatic, aromatic or araliphatic epoxy containing a primary or secondary hydroxyl group after removal of the epoxide groups and the primary or secondary hydroxyl group; and q = 1, 2 or 3;
in the presence of at least one compound selected from anhydrides, ketones, and aldehydes as glycol scavenger, wherein the isocyanate-terminated prepolymer of formula (II), the epoxy resin and the glycol scavenger are mixed with one another or the epoxy resin is reacted with the glycol scavenger before they are mixed with the isocyanate-terminated prepolymer of formula (II).

2. The method according to claim 1, **characterized in that** the isocyanate-terminated prepolymer of formula (II) can be obtained by reacting a X₁H-group-bearing prepolymer selected from polyether polyols, polybutadiene polyols, polyester polyols, polycarbonate polyols, NH-terminated polyether and mixtures thereof with one or more polyisocyanates.

3. The method according to claim 1 or claim 2, **characterized in that** the epoxy resin is or comprises a reaction product of at least one epoxy and at least one diol, triol or higher valent polyol or a reaction product of an epoxy resin and at least one monophenol.

4. The method according to any one of claims 1 to 3, **characterized in that** the epoxy resin is selected from a bisphenol A diglycidyl ether product, a bisphenol F diglycidyl ether product or a bisphenol A/F diglycidyl ether product.

5. The method according to any one of claims 1 to 4, **characterized in that** the epoxy compound of formula (III) is selected from trimethylolpropane diglycidyl ether, butanediol diglycidyl ether, cyclohexandimethanol diglyci-dyl ether, dimer of bisphenol A diglycidyl ether, dimer of bisphenol F diglycidyl ether, dimer of bisphenol A/F diglycidyl ether, or mixtures thereof.

6. The method according to any one of claims 1 to 5, **characterized in that** the epoxy resin comprises a compound of formula (VI) as hydroxy-epoxy compound of formula (III) 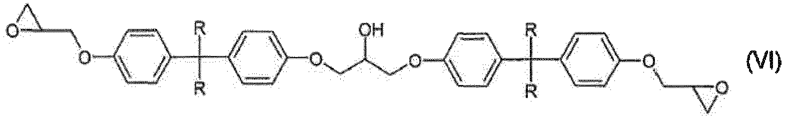 wherein R is independently H or methyl.

7. The method according to any one of claims 1 to 6, **characterized in that** the glycol scavenger is an anhydride.

8. The method according to any one of claims 1 to 7, **characterized in that** the anhydride is selected from at least one cyclic carboxylic anhydride, with succinic acid, succinic acid derivatives, phthalic acid and phthalic acid derivatives being preferred.

9. The method according to any one of claims 1 to 8, **characterized in that** the isocyanate groups of the isocyanate-terminated prepolymer of formula (II) are partially or completely blocked by the reaction with the epoxy compound (III).

10. The method according to any one of claims 1 to 9, **characterized in that** the amount of glycol scavenger used, preferably anhydride, is in the range of 0.25 to 3.00% by weight, based on the amount of epoxy resin.

11. The method according to any one of claims 1 to 10, **characterized in that** the isocyanate-terminated prepolymer of formula (II) can be obtained by reacting a X₁H group-bearing prepolymer, one or more polyisocyanate and at least one polyphenol.

12. The method according to any one of claims 1 to 10, **characterized in that** the isocyanate-terminated prepolymer of formula (II) can be obtained by reaction of at least two polyols with one or more polyisocyanates, wherein at least one polyether polyol and at least one OH-terminated rubber are used as polyols, and the weight ratio of polyether polyol to OH-terminated rubber is preferably in the range of 7:3 to 2:8.

13. Liquid rubber containing an epoxy-terminated impact-resistance modifier obtainable by a method according to any one of claims 1 to 12.

14. Use of a liquid rubber according to claim 13 in a one-component or two-component epoxy resin composition, preferably in one-component or two-component epoxy resin, for increasing the impact strength of the cured epoxy resin matrix.

15. One-component or two-component epoxy resin composition comprising at least one liquid rubber according to claim 13.

16. One-component or two-component epoxy resin composition according to claim 15, comprising
a) at least one epoxy resin (A); and
b) said liquid rubber.

17. One-component or two-component epoxy resin composition according to claim 15 or 16, **characterized in that** it is a one-component or two-component epoxy resin adhesive.

## Revendications

1. Procédé de fabrication d'un caoutchouc liquide contenant un modificateur de la résistance aux impacts terminé par des groupes époxyde, comprenant la mise en réaction d'un prépolymère à terminaison isocyanate de formule (II) 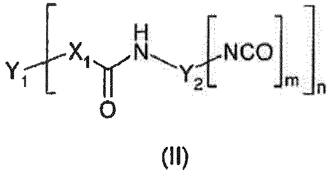
dans laquelle X₁ = 0, S ou NH ;
Y₁ représente un radical n-valent d'un polymère réactif après l'élimination des groupes amino, thiol ou hydroxyle terminaux ;
Y₂ représente un radical bivalent de diisocyanates aliphatiques, cycloaliphatiques, aromatiques ou araliphatiques après l'élimination des groupes isocyanate, ou un radical trivalent de trimères ou de biurets de diisocyanates aliphatiques, cycloaliphatiques, aromatiques ou araliphatiques après l'élimination des groupes isocyanate ;
m = 1 ou 2 ; et
n = 2, 3 ou 4 ; de préférence 2 ou 3,
avec au moins une résine époxyde, comprenant un composé d'époxyde contenant un groupe hydroxy primaire ou secondaire de formule (III) 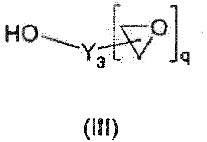
dans laquelle Y₃ représente un radical d'un époxyde aliphatique, cycloaliphatique, aromatique ou araliphatique contenant un groupe hydroxyle primaire ou secondaire après l'élimination des groupes époxyde et du groupe hydroxyle primaire ou secondaire ; et
q = 1, 2 ou 3 ;
en présence d'au moins un composé choisi parmi les anhydrides, les cétones et les aldéhydes en tant que capteur de glycol, le prépolymère à terminaison isocyanate de formule (II), la résine époxyde et le capteur de glycol étant mélangés les uns avec les autres, ou la résine époxyde étant mise en réaction avec le capteur de glycol avant d'être mélangée avec le prépolymère à terminaison isocyanate de formule (II).

2. Procédé selon la revendication 1, **caractérisé en ce que** le prépolymère à terminaison isocyanate de formule (II) peut être obtenu par mise en réaction d'un prépolymère portant des groupes X₁H choisi parmi les polyéther-polyols, les polybutadiène-polyols, les polyester-polyols, les polycarbonate-polyols, les polyéthers à terminaison NH et leurs mélanges avec un ou plusieurs polyisocyanates.

3. Procédé selon la revendication 1 ou la revendication 2, **caractérisé en ce que** la résine époxyde est ou comprend un produit de réaction d'au moins un époxyde et d'au moins un diol, un triol ou un polyol de valence supérieure ou un produit de réaction d'une résine époxyde et d'au moins un monophénol.

4. Procédé selon l'une quelconque des revendications 1 à 3, **caractérisé en ce que** la résine époxyde est choisie parmi un produit d'éther diglycidylique de bisphénol A, un produit d'éther diglycidylique de bisphénol F ou un produit d'éther diglycidylique de bisphénol A/F.

5. Procédé selon l'une quelconque des revendications 1 à 4, **caractérisé en ce que** le composé d'époxyde de formule (III) est choisi parmi l'éther diglycidylique de triméthylolpropane, l'éther diglycidylique de butanediol, l'éther diglycidylique de cyclohexanediméthanol, un dimère de l'éther diglycidylique de bisphénol A, un dimère de l'éther diglycidylique de bisphénol F, un dimère de l'éther diglycidylique de bisphénol A/F ou des mélanges de ceux-ci.

6. Procédé selon l'une quelconque des revendications 1 à 5, **caractérisé en ce que** la résine époxyde comprend en tant que composé d'hydroxy-époxyde de formule (III) un composé de formule (VI) 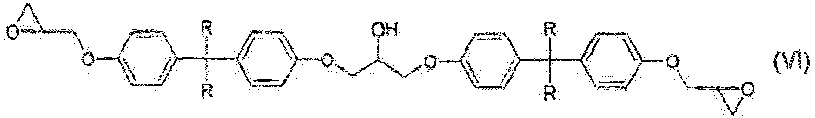 dans laquelle les R représentent indépendamment les uns des autres H ou méthyle.

7. Procédé selon l'une quelconque des revendications 1 à 6, **caractérisé en ce que** le capteur de glycol est un anhydride.

8. Procédé selon l'une quelconque des revendications 1 à 7, **caractérisé en ce que** l'anhydride est choisi parmi au moins un anhydride d'acide carboxylique cyclique ; l'acide succinique, les dérivés de l'acide succinique, l'acide phtalique et les dérivés de l'acide phtalique étant préférés.

9. Procédé selon l'une quelconque des revendications 1 à 8, **caractérisé en ce que** les groupes isocyanate du prépolymère à terminaison isocyanate de formule (II) sont bloqués en partie ou en totalité par la réaction avec le composé d'époxyde (III).

10. Procédé selon l'une quelconque des revendications 1 à 9, **caractérisé en ce que** la quantité utilisée de capteur de glycol, de préférence d'anhydride, se situe dans la plage allant de 0,25 à 3,00 % en poids, par rapport à la quantité de résine époxyde.

11. Procédé selon l'une quelconque des revendications 1 à 10, **caractérisé en ce que** le prépolymère à terminaison isocyanate de formule (II) peut être obtenu par mise en réaction d'un prépolymère portant des groupes X₁H, d'un ou de plusieurs polyisocyanates et d'au moins un polyphénol.

12. Procédé selon l'une quelconque des revendications 1 à 10, **caractérisé en ce que** le prépolymère à terminaison isocyanate de formule (II) peut être obtenu par mise en réaction d'au moins deux polyols avec un ou plusieurs polyisocyanates ; au moins un polyéther polyol et au moins un caoutchouc à terminaison OH étant utilisés en tant que polyols, et le rapport en poids entre le polyéther-polyol et le caoutchouc à terminaison OH se situant de préférence dans la plage allant de 7:3 à 2:8.

13. Caoutchouc liquide contenant un modificateur de la résistance aux impacts terminé par des groupes époxyde, pouvant être obtenu par un procédé selon l'une quelconque des revendications 1 à 12.

14. Utilisation d'un caoutchouc liquide selon la revendication 13 dans une composition de résine époxyde monocomposante ou bicomposante, de préférence dans un adhésif à base de résine époxyde monocomposant ou bicomposant, pour augmenter la résistance aux impacts de la matrice de résine époxyde durcie.

15. Composition de résine époxyde 1K ou 2K, comprenant au moins un caoutchouc liquide selon la revendication 13.

16. Composition de résine époxyde 1K ou 2K selon la revendication 15, comprenant :
a) au moins une résine époxyde (A) ; et
b) le caoutchouc liquide.

17. Composition de résine époxyde 1K ou 2K selon la revendication 15 ou 16, **caractérisée en ce qu'**il s'agit d'un adhésif à base de résine époxyde 1K ou 2K.
